Europäisches Patentamt

European Patent Office

Office européen des brevets

(19)

(11) **EP 1 110 140 B1**

## (12) FASCICULE DE BREVET EUROPEEN

(45) Date de publication et mention
de la délivrance du brevet:
**17.09.2003 Bulletin 2003/38**

(21) Numéro de dépôt: **00949685.2**

(22) Date de dépôt: **07.07.2000**

(51) Int Cl.[7]: **G06F 7/72**

(86) Numéro de dépôt international:
**PCT/FR00/01979**

(87) Numéro de publication internationale:
**WO 01/004742 (18.01.2001 Gazette 2001/03)**

(54) **PROCEDE DE CALCUL POUR LA CRYPTOGRAPHIE A COURBE ELLIPTIQUE**

BERECHNUNGSVERFAHREN FÜR KRYPTOGRAPHIE MITTELS ELLIPTISCHER KURVEN

COMPUTING METHOD FOR ELLIPTIC CURVE CRYPTOGRAPHY

(84) Etats contractants désignés:
**DE ES FR GB IT**

(30) Priorité: **09.07.1999 FR 9908949**

(43) Date de publication de la demande:
**27.06.2001 Bulletin 2001/26**

(73) Titulaire: **OBERTHUR CARD SYSTEMS SA**
**75017 Paris (FR)**

(72) Inventeur: **KNUDSEN, Erik**
**F-75011 Paris (FR)**

(74) Mandataire: **Santarelli**
**14, avenue de la Grande Armée,**
**B.P. 237**
**75822 Paris Cedex 17 (FR)**

(56) Documents cités:
- **KENJI KOYAMA ET AL: "ELLIPTIC CURVE CRYPTOSYSTEMS AND THEIR APPLICATIONS" IEICE TRANSACTIONS ON INFORMATION AND SYSTEMS,JP,INSTITUTE OF ELECTRONICS INFORMATION AND COMM. ENG. TOKYO, vol. E75 - D, no. 1, janvier 1992 (1992-01), pages 50-57, XP000301174 ISSN: 0916-8532**
- **MEYER B ET AL: "A PUBLIC CRYPTOSYSTEM BASED ON ELLIPTIC CURVES OVER Z/NZ EQUIVALENTTO FACTORING" ADVANCES IN CRYPTOLOGY - EUROCRYPT. INTERNATIONAL CONFERENCE ON THE THEORY AND APPLICATION OF CRYPTOGRAPHIC TECHNIQUES,DE,BERLIN, SPRINGER, 12 mai 1996 (1996-05-12), pages 49-59, XP000725434 ISBN: 3-540-61186-X**
- **KNUDSEN E W: "Elliptic scalar multiplication using point halving" ADVANCES IN CRYPTOLOGY - ASIACRYPT'99. INTERNATIONAL CONFERENCE ON THE THEORY AND APPLICATIONS OF CRYPTOLOGY AND INFORMATION SECURITY. PROCEEDINGS, SINGAPORE, 14-18 NOV. 1999, pages 135-149, XP000921099 1999, Berlin, Germany, Springer-Verlag, Germany ISBN: 3-540-66666-4**

**Description**

L'invention se rapporte à un procédé de cryptographie mis en oeuvre entre deux entités échangeant des informations à travers un canal de communication non sécurisé, par exemple un réseau câblé ou hertzien et permettant d'assurer la confidentialité et l'intégrité des transferts d'informations entre ces deux entités. L'invention concerne plus particulièrement un perfectionnement aux cryptosystèmes mettant en oeuvre des calculs sur une courbe elliptique. Le perfectionnement permet principalement de réduire les temps de calcul.

On connaît un protocole de cryptographie, plus particulièrement utilisé pour réaliser un échange de clefs sécurisé entre deux entités. Il est connu sous l'appellation "Echange de Clefs de Diffie-Hellmann" ou "ECDH". Sa mise en oeuvre nécessite l'utilisation d'un groupe au sens mathématique du terme. Une courbe elliptique du type :

$$y^2 + xy = x^3 + \alpha x^2 + \beta$$

peut constituer un groupe utilisable dans un tel procédé ;

On sait que si $P = (x,y)$ appartient à la courbe elliptique E, on peut définir un "produit" ou "multiplication scalaire " du point P de E par un entier m. Cette opération est définie comme suit :

$$[m] P = P + P + P \ldots + P \text{ (m fois)}$$

On sait que dans un algorithme du type "ECDH", on utilise la multiplication par 2 d'un point P choisi d'une telle courbe elliptique. Cette opération s'appelle "doublement de point" et s'inscrit dans un processus itératif de doublement-et-addition. Une telle multiplication par 2 requiert du temps.

La partie la plus lente du protocole d'Echange de Clés de Diffie-Hellman (ECDH) est la multiplication d'un point de la courbe non connu à l'avance par un scalaire aléatoire. On ne considère ici que les courbes elliptiques définies sur un corps de caractéristique 2 ; c'est un choix répandu pour les implémentations, car l'addition dans un tel corps correspond à l'opération "'ou exclusif".

Il est connu que la multiplication par un scalaire peut être accélérée pour les courbes définies sur un corps de faible cardinalité en utilisant le morphisme de Frobenius. On peut choisir les courbes de sorte qu'aucune des attaques connues ne s'applique à elles. Cependant, il est évidemment préférable, au moins sur le plan du principe, de pouvoir choisir la courbe que l'on veut utiliser dans une classe de courbes aussi générale que possible. La méthode décrite dans l'invention s'applique, dans sa version la plus rapide, à la moitié des courbes elliptiques. De plus, d'un point de vue cryptographique, cette moitié est la meilleure. Avant de donner le principe de la méthode, on rappelle les concepts de base.

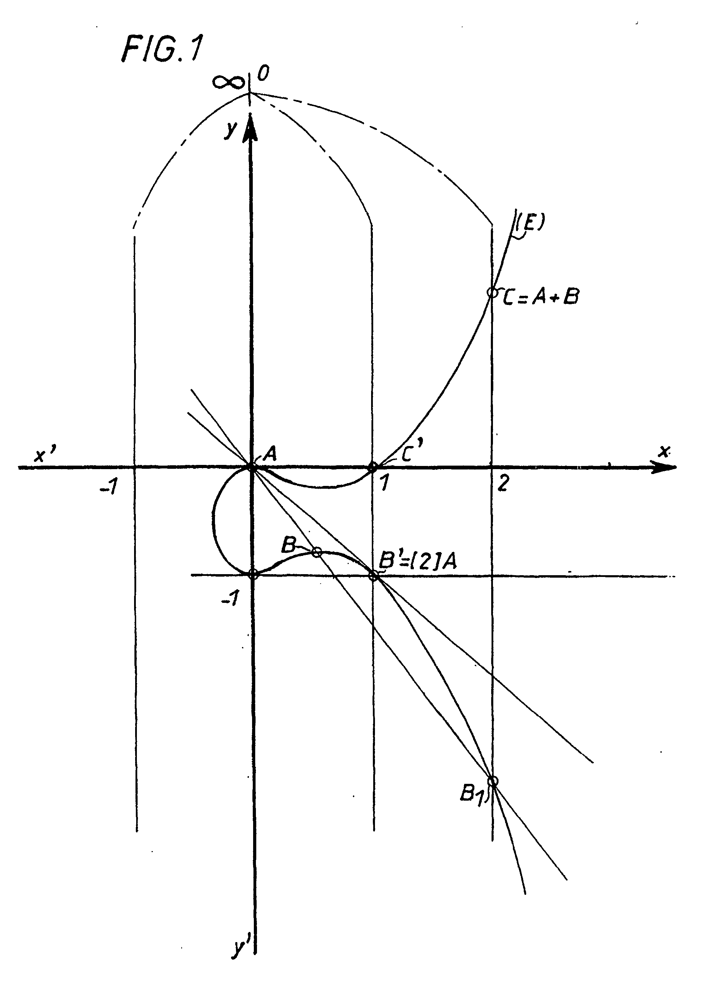

Pour illustrer simplement, prenons la courbe elliptique (E) représentable géométriquement définie sur l'ensemble R des nombres réels par l'équation $y^2 + y = x^3 - x^2$, représentée sur la figure 1 où une ligne horizontale représente un nombre entier m, une ligne verticale représente un nombre entier n et chaque intersection de telles lignes horizontale et verticale représente la paire de coordonnées entières (m, n).

(E) passe par un nombre fini de points à coordonnées entières, et toute sécante à (E) issue d'un tel point recoupe (E) en 2 points, éventuellement confondus (cas des tangentes à la courbe).

L'opération d'addition entre deux quelconques de ces points A et B est définie de la manière suivante : soit $B_1$ le point où la droite (AB) recoupe (E) ; la verticale de $B_1$ recoupe (E) en C = A + B.

Dans le cas particulier où (AB') est tangente à (E), C' est la somme cherchée.

Le point O, "intersection de toutes les verticales", est appelé point à l'infini de (E) et est l'élément neutre de l'addition ainsi définie, puisqu'en appliquant la construction géométrique de définition de l'addition, on a bien : A+O = O+A = A.

Le doublement de A, noté [2]A et défini comme : A + A, est donc le point B', la droite (Ax) étant tangente en A à (E).

En appliquant au point B' la construction d'addition de A, on obtiendrait le point [3]A, et ainsi de suite : c'est la définition du produit [n]A d'un point par un entier.

La présente invention concerne en fait une famille de courbes elliptiques, non représentables géométriquement mais définies comme suit :

Soit n un entier donné, $F_{2^n}$ le corps de $2^n$ éléments, et $\overline{F_{2^n}}$ sa clôture algébrique. Soit O le point à l'infini. On appelle courbe elliptique E non supersingulière définie sur $F_{2^n}$ l'ensemble :

$$E = \{(x,y) \in F_{\overline{2^n}} \times \overline{F}_{\overline{2^n}} \mid y^2 + xy = x^3 + \alpha x^2 + \beta\} \cup \{O\} \quad \alpha, \beta \in F_{2^n}, \beta \neq 0$$

Les éléments de E sont habituellement appelés "points". Il est bien connu que E peut être doté d'une structure de groupe abélien en prenant le point à l'infini comme élément neutre. Dans ce qui suit, on considère le sous-groupe fini des points rationnels de E, défini par :

$$E(\,F_{2^n}) = \{(x,y)\in F_{2^n} \times F_{2^n} \,|y^2 + xy = x^3 + \alpha x^2 + \beta\} \cup \{O\} \;\; \alpha, \beta \in F_{2^n}, \beta \neq 0$$

N étant l'ensemble des entiers naturels, pour tout $m \in N$, on définit dans E l'application "multiplication par m" par :

$$[m] : E \to E$$

$$P \to P + ..... + P \;(m \text{ fois}) \text{ et } \forall P \in E : [O]P = O$$

On note E[m] le noyau de cette application. Les points du groupe E[m] sont appelés les points de m-torsion de E. La structure de groupe des points de m-torsion est bien connue.
En se limitant au cas où m est une puissance de 2, on a :

$$\forall k \in N : E[2^k] \cong Z/2^k Z$$

où Z est l'ensemble des entiers relatifs.
Comme $E(F_{2^n})$ est un sous-groupe fini de E, il existe $k' \geq 1$ tel que $E[2^k]$ est contenu dans $E(F_{2^n})$ si et seulement si $k \leq k'$. Si on se limite aux courbes elliptiques E pour lesquelles k'=1, la structure de $E(F_{2^n})$ est :

$$E(F_{2^n}) = G \times \{O, T_2\}$$

où G est un groupe d'ordre impair et $T_2$ désigne le point unique d'ordre 2 de E. On dit qu'une telle courbe a une 2-torsion minimale.
On est maintenant en mesure d'expliquer le but de l'invention. La multiplication par deux, n'est pas injective lorsqu'elle est définie sur E ou $E(F_{2^n})$, car elle a pour noyau : $E[2] = \{O, T_2\}$.
Par ailleurs, si on réduit le domaine de définition de la multiplication par 2 à un sous-groupe d'ordre impair G $\subset E(F_{2^n})$, la multiplication par 2 devient bijective.
Il en résulte que la multiplication par 2 admet sur ce sous-groupe une application inverse que nous appellerons division par 2 :

$$[1/2] : G \to G$$

$$P \to Q \text{ tel que} : [2] Q = P$$

On note [1/2] P le point de G auquel l'application de doublement fait correspondre le point P.
Pour tout $k \geq 1$, on écrit :

$$\left[\frac{1}{2^k}\right] = \left[\frac{1}{2}\right] \circ \left[\frac{1}{2}\right] \circ ........ \circ \left[\frac{1}{2}\right]$$

Pour représenter k compositions de l'application de division par 2 avec elle-même.
De façon générale l'invention concerne donc un procédé de cryptographie mis en oeuvre entre deux entités échangeant des informations à travers un canal de communication non sécurisé, du type comprenant au moins une phase opératoire consistant à multiplier un point d'ordre impair d'une courbe elliptique non supersingulière par un entier, en coordonnées affines, caractérisé en ce qu'une telle phase opératoire comprend des additions et des divisions par deux de points de ladite courbe elliptique; où l'addition de points est une opération connue, et la division par deux d'un point P est définie comme le point unique D d'ordre impair tel que [2]D=P, un tel point étant noté

$$\left[\frac{1}{2}\right]$$

P, et l'opération de division par 2 :

$$\left[\frac{1}{2}\right] \ .$$

L'application de division par 2 est intéressante pour la multiplication scalaire d'un point d'une courbe elliptique pour la raison suivante : si l'on travaille en coordonnées affines, il est possible de remplacer toutes les multiplications de point par 2 d'une multiplication scalaire par des divisions de point par 2.

La division par 2 d'un point est bien plus rapide à calculer que sa multiplication par 2. D'un point de vue cryptographique, il est bon d'avoir à choisir parmi le plus grand nombre de courbes possible, et on a coutume d'utiliser une courbe pour laquelle la 2-torsion de $E(F_{2n})$ est minimale ou isomorphique à $Z/4Z$. Pour un corps $F_{2n}$ donné, les courbes elliptiques de 2-torsion minimale constituent exactement la moitié de l'ensemble des courbes elliptiques définies sur $F_{2n}$. C'est pourquoi, bien qu'elle ne soit pas totalement générale, la méthode décrite s'applique, dans sa version la plus rapide, à une bonne partie des courbes intéressantes en cryptographie. Elle est toujours applicable dans le cas où les éléments du corps sont représentés dans une base normale. Dans le cas d'une base polynomiale, l'espace mémoire requis est de l'ordre de $O(n^2)$ bits.

Certains exemples sont donnés ci-dessous, en référence aux dessins annexés dans lesquels :

- la figure 1 est un graphe illustrant une courbe elliptique très particulière mais représentable géométriquement, permettant de clarifier des opérations élémentaires mises en oeuvre dans le cadre de l'invention, ces opérations étant explicitées ci-dessus ;
- la figure 2 est un schéma illustrant des échanges d'informations conformes à l'invention, entre deux entités ;
- les figures 3 à 6 sont des organigrammes explicitant certaines applications conformes à l'invention ; et
- la figure 7 est un schéma-bloc d'un autre système d'échange d'informations entre deux entités A et B, susceptible de mettre en oeuvre un processus de cryptographie conforme à l'invention.

On va montrer comment calculer [1/2] $P \in G$ à partir de $P \in G$. Puis on montrera comment remplacer les doublements de points par des divisions par 2 pour exécuter une multiplication par un scalaire.

On utilisera la représentation affine habituelle d'un point : $P=(x,y)$ et la représentation : $(x, \lambda_p)$ avec $\lambda_p = x+y / x$

On tire de la deuxième représentation $y = x (x + \lambda_p)$ qui n'utilise qu'une multiplication.

En procédant ainsi, pour multiplier un point par un scalaire, on économise les multiplications en calculant les résultats intermédiaires à l'aide de la représentation $(x, \lambda_p)$ et on ne détermine la coordonnée de la représentation affine qu'en fin de calcul.

La division par deux d'un point P s'obtient de la façon suivante :

Soit à calculer [1/2] P à partir de P. On considère pour cela les deux points de E :

$$P = (x,y) = (x, x (x + \lambda_p))$$

et

$$Q = (u,v) = (u, u (u + \lambda_Q))$$

tels que : [2]Q= P

Les formules de multiplication par 2 connues donnent

$$\lambda_Q = u + v/u \tag{1}$$

$$x = \lambda_Q{}^2 + \lambda_Q + \alpha \tag{2}$$

$$y = (x+u)\,\lambda_Q + x + v \tag{3}$$

Multipliant (1) paru et reportant la valeur de v ainsi obtenue dans (3), ce système devient :

$$v = u(u + \lambda_Q)$$

$$\lambda_Q{}^2 + \lambda_Q = \alpha + x$$

$$y = (x + u)\lambda_Q + x + u^2 + u\,\lambda_Q = u^2 + x(\lambda_Q + 1)$$

ou, puisque $y = x(x + \lambda_p)$:

$$\lambda_Q{}^2 + \lambda_Q = \alpha + x \tag{i}$$

$$u^2 = (x(\lambda_Q + 1) + y = (\lambda_Q + \lambda_p + x + 1) \tag{ii}$$

$$v = u(u + \lambda_Q) \tag{iii}$$

En partant de $P = (x,y) = (x, x(x + \lambda_p))$ en coordonnées affines ou en représentation $(x, \lambda_p)$, ce système d'équations détermine les deux points :

$$[1/2]\,P \in G \text{ et } [1[/2]P + T_2 \in E(F_{2^n})\backslash G$$

qui donnent P par multiplication par 2. La propriété qui suit permet de la distinguer.

Soit E une courbe elliptique à 2-torsion minimale, et $P \in E(F_{2^n}) = G \times \{O, T_2\}$ l'un de ses éléments d'ordre impair.

Soit $Q \in \{[1/2]\,P, [1/2]\,P + T_2\}$ et $Q_1$ l'un des deux points de E tels que $[2]Q_1 = Q$.

On a la condition nécessaire et suffisante :

$$Q + [1/2]P \Leftrightarrow Q_1 \in E(F_{2^n}) \tag{a}$$

On en déduit qu'il est possible de tester si $Q = [1/2]\,P$ en appliquant les formules (i), (ii) et (iii) à Q et en vérifiant si l'un de points obtenus appartient à $E(F_{2^n})$.

Ce procédé peut être étendu à une courbe elliptique arbitraire $E(F_{2^n}) = G \times E[2^k]$. Pour cela on applique k fois les formules (i), (ii) et (iii) : la 1ère fois à Q, pour obtenir $Q_1$, tel que $[2]Q_1 = Q$; la ième fois à $Q_{i-1}$ pour obtenir un point $Q_i$, tel que $[2]Q_i = Q_{i-1}$. Le point résultat $Q_k$ sera de la forme

$$\left[\frac{1}{2^{k+1}}\right]$$

$P + T_{2k+1}$ si et seulement si $Q = [1/2]P + T_2$ et il sera de la forme

$$\left[\frac{1}{2^{k+1}}\right]$$

$P+T_{2i}$ avec $0 \leq i \leq k$ si et seulement si $Q = [1/2]P$. On a donc la condition nécessaire et suffisante :

$$Q = [1/2]P \Leftrightarrow Q_K \in E(F_{2^n})$$

Ce procédé est évidemment long si k est grand.

La relation (a) montre que l'on peut savoir si $Q = [1/2]P$ ou $Q = [1/2]P + T_2$ en regardant si les coordonnées de $Q_1$, appartiennent à $F_{2^n}$ ou à un sur-corps de $F_{2^n}$. Comme $Q_1$ est déterminé par les équations (i), (ii) et (iii), nous avons à étudier les opérations utilisées dans la résolution de ces équations qui ne sont pas internes au corps, mais ont leur résultat dans un sur-corps de $F_{2^n}$. Le seul cas possible est celui de la résolution de l'équation du $2^{nd}$. degré (i) : on doit aussi calculer une racine carrée pour calculer la $1^{ère}$ coordonnée de $Q_1$, mais en caractéristique 2 la racine carrée est une opération interne au corps. On a donc :

$$Q = (u, v) = [1/2]\, P \Leftrightarrow \exists \lambda \in F_{2^n} : \lambda^2 + \lambda = \alpha + u$$

Cette condition nécessaire et suffisante s'écrit aussi, puisque la racine carrée est interne au corps :

$$Q = (u, v) = [1/2]\, P \Leftrightarrow \exists \lambda \in F_{2^n} : \lambda^2 + \lambda = \alpha^2 + u^2$$

La relation précédente permet d'optimiser l'algorithme énoncé ci-dessous dans les cas où le temps de calcul de la racine carrée n'est pas négligeable.

Pour $P \in G$, les 2 solutions de (i) sont $\lambda_{[1/2]P}$ et $\lambda_{[1/2]P} + 1$, et on déduit de (ii) que les 1ères coordonnées des points associés sont u et $(u + \sqrt{x})$. On peut donc en déduire un algorithme permettant de calculer [1/2]P de la façon suivante :

Si $F_{2^n}$ est un corps fini de $2^n$ éléments, $E(F_{2^n})$ est le sous-groupe d'une courbe elliptique E, défini par :

$$E(F_{2^n}) = \{(x,y) \in F_{2^n} \times F_{2^n}\, |y^2 + xy = x^3 + \alpha x^2 + \beta\} \cup \{O\}\ \alpha,\ \beta \in F_{2^n},\ \beta \neq O,$$

et $E[2^k]$ est l'ensemble des points P de ladite courbe elliptique tels que P, additionné $2^k$ fois à lui même donne l'élément neutre *O* avec k entier supérieur ou égal à 1, alors, un point $P = (x,y)$ de ladite courbe elliptique donne par ladite division par deux le point

$$\left[\frac{1}{2}\right]$$

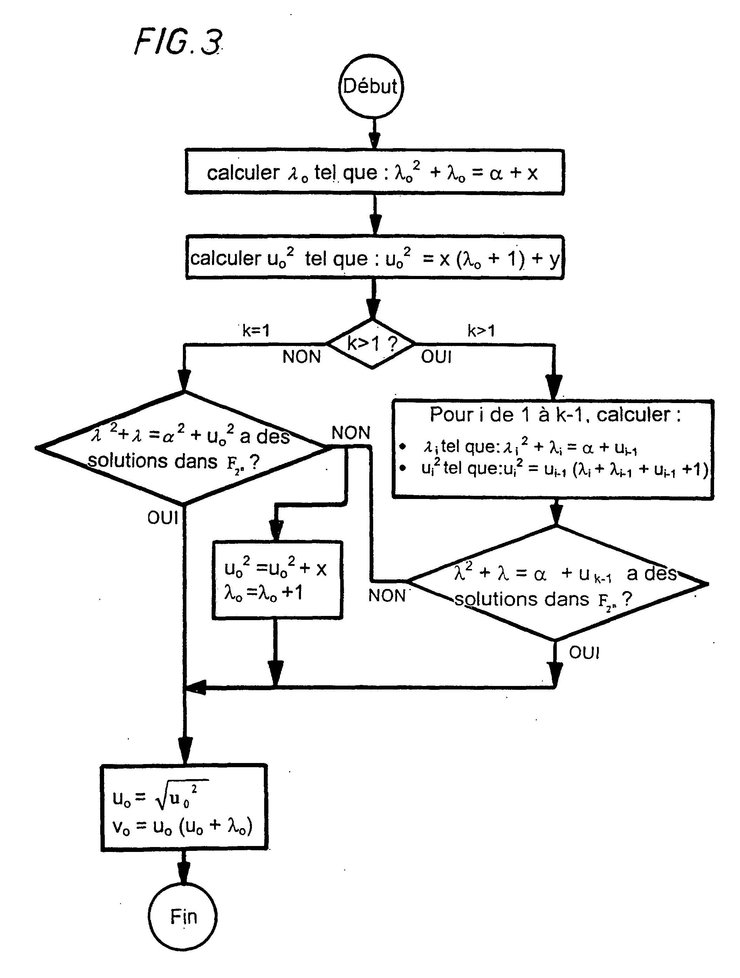

$P = (u_o, v_o)$ de ladite courbe elliptique, obtenu en effectuant les opérations suivantes illustrées par l'organigramme de la figure 3 :

- on cherche une première valeur $\lambda_o$ telle que $\lambda_o^2 + \lambda_o = \alpha + x$
- on calcule une seconde valeur $u_o^2$ telle que $u_o^2 = x(\lambda_o + 1) + y$
- si k vaut 1, on cherche si l'équation : $\lambda^2 + \lambda = \alpha^2 + u_o^2$ a des solutions dans $F_{2n}$,
- dans l'affirmative on calcule ladite division par deux par :

$$u_o = \sqrt{u_0^2}$$

$$v_o = u_o (u_o + \lambda_o)$$

et

$$\left[\frac{1}{2}\right] P = (u_o, v_o)$$

- dans la négative, on ajoute x à ladite deuxième valeur $u_o^2$ et on ajoute 1 à ladite première valeur $\lambda_o$ pour calculer ladite division par deux comme dans l'opération précédente ;
- si k est plus grand que 1, on effectue un calcul itératif consistant à :

    chercher une valeur $\lambda_i$, telle que $\lambda_i^2 + \lambda_i = \alpha + u_{i-1}$
    puis calculer la valeur $u^2_i$ telle que $u^2_i = u_{i-1} (\lambda_i + \lambda_{i-1} + u_{i-1} +1)$
    en incrémentant i à partir de i=1 jusqu'à obtenir la valeur $u_{k-1}^2$

- on cherche si l'équation $\lambda^2 + \lambda = \alpha^2 + u^2_{k-1}$ a des solutions dans $F_{2n}$
- dans l'affirmative on calcule ladite division par deux par :

$$u_o = \sqrt{u_0}^2$$

$$v_o = u_o (u_o + \lambda_o)$$

et

$$\left[\frac{1}{2}\right] P = (u_o, v_o)$$

- dans la négative, on ajoute x à ladite deuxième valeur $u_o^2$ et on ajoute 1 à ladite première valeur $\lambda_o$ pour calculer ladite division par deux comme dans l'opération précédente.

Si on choisit de représenter le point

$$\left[\frac{1}{2}\right] P = (u_o, v_o)$$

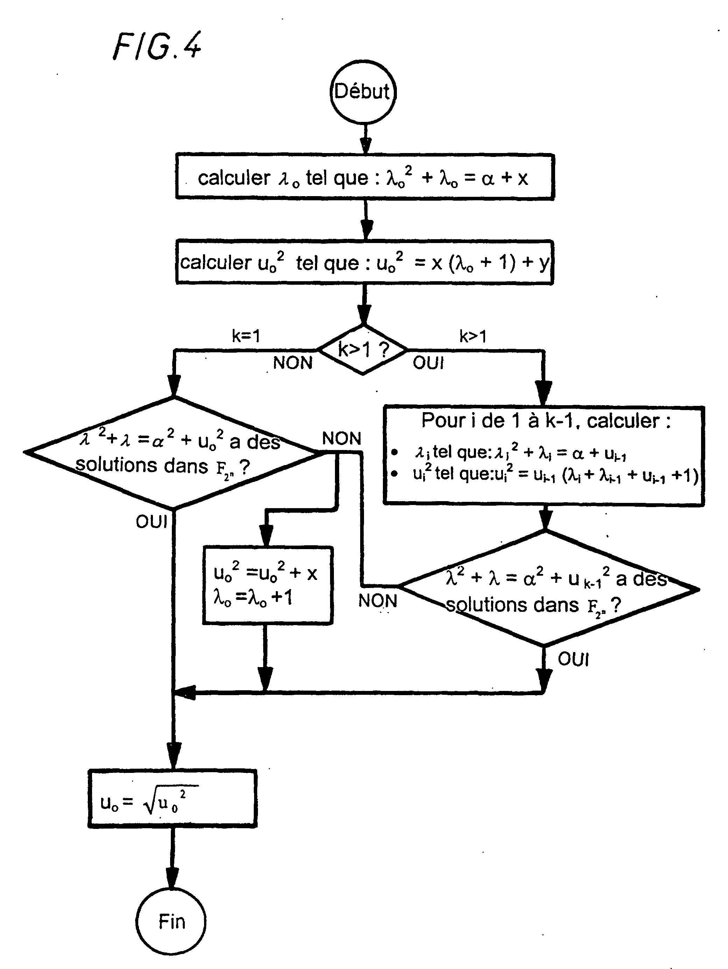

de la courbe elliptique par $(u_o, \lambda_o)$ avec $\lambda_o = u_0 + v_o /u_0$, alors l'algorithme est conforme à l'organigramme de la figure 4 où :

- on cherche une première valeur $\lambda_o$ telle que $\lambda_o^2 + \lambda_o = \alpha + x$
- on calcule une seconde valeur $u_o^2$ telle que : $u_o^2 = x (\lambda_o + 1) + y$,
- si k vaut 1, on cherche si l'équation : $\lambda^2_0 + \lambda_0 = \alpha^2 + u^2_0$ a des solutions dans $F_{2n}$,
- dans l'affirmative on calcule ladite division par deux par :

$$u_o = \sqrt{u_0}^2$$

et :

$$\left[\frac{1}{2}\right]P = (u_o, \lambda_o)$$

.

- dans la négative, on ajoute x à ladite deuxième valeur $u_o^2$ et on ajoute 1 à ladite première valeur $\lambda_o$ pour calculer ladite division par deux comme dans l'opération précédente ;
- si k est plus grand que 1, on effectue un calcul itératif consistant à :

  chercher une valeur $\lambda_i$, telle que $\lambda_i^2 + \lambda_i = \alpha + u_{i-1}$
  puis calculer la valeur $u_i^2$ telle que $u_i^2 = u_{i-1} (\lambda_i + \lambda_{i-1} + u_{i-1} +1)$

  en incrémentant i à partir de i = 1 jusqu'à obtenir la valeur $u^2$ k-1
- on cherche si l'équation $\lambda^2 + \lambda = \alpha^2 + u^2_{k-1}$ a des solutions dans $F_{2^n}$
- dans l'affirmative on calcule ladite division par deux par :

$$u_o = \sqrt{u_0^2}$$

et

$$\left[\frac{1}{2}\right]P = (u_o, \lambda_o)$$

- dans la négative, on ajoute x à ladite deuxième valeur $u_o^2$ et on ajoute 1 à ladite première valeur $\lambda_o$ pour calculer ladite division par deux comme dans l'opération précédente.

Si on choisit de représenter le point P = (x,y) par ( x, $\lambda_p$) en posant $\lambda_p$ = x+y/x qui donne par ladite division par deux le point

$$\left[\frac{1}{2}\right]P = (u_o, v_o)$$

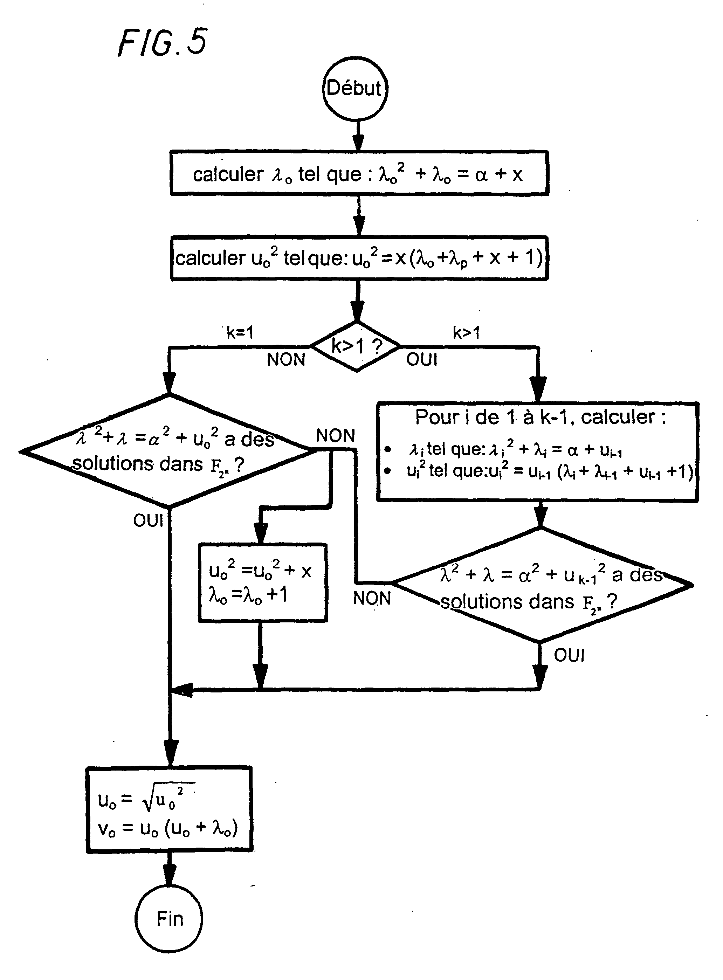

de ladite courbe elliptique alors l'algorithme est conforme à l'organigramme de la figure 5 où :

- on cherche une première valeur $\lambda_o$ telle que $\lambda_o^2 + \lambda_o = \alpha + x$
- on calcule une seconde valeur $u_o^2$ telle que $u_o^2 = x(\lambda_o + \lambda_p + x + 1)$
- si k vaut 1, on cherche si l'équation : $\lambda^2 + \lambda = \alpha^2 + u_o^2$ a des solutions dans $F_{2^n}$,
- dans l'affirmative on calcule ladite division par deux par :

$$u_o = \sqrt{u_0^2}$$

$$v_o = u_o (u_o + \lambda_o)$$

et :

$$\left[\frac{1}{2}\right]P = (u_o, v_o)$$

- dans la négative, on ajoute x à ladite deuxième valeur $u_o^2$ et on ajoute 1 à ladite première valeur $\lambda_o$ pour calculer ladite division par deux comme dans l'opération précédente;
- si k est plus grand que 1, on effectue un calcul itératif consistant à :

  chercher une valeur $\lambda_i$, telle que $\lambda_i^2 + \lambda_i = \alpha + u_{i-1}$
  puis calculer la valeur $u^2_i$ telle que $u^2_i = u_{i-1} (\lambda_i + \lambda_{i-1} + u_{i-1} + 1)$

  en incrémentant i à partir de i=1 jusqu'à obtenir la valeur $u^2_{k-1}$
- on cherche si l'équation $\lambda^2 + \lambda = \alpha^2 + u^2_{k-1}$ a des solutions dans $F_{2^n}$
- dans l'affirmative on calcule ladite division par deux par :

$$u_o = \sqrt{u_0^2}$$

$$v_o = u_o (u_o + \lambda_o)$$

et

$$\left[\frac{1}{2}\right] P = (u_o, v_o)$$

- dans la négative, on ajoute x à ladite deuxième valeur $u_o^2$ et on ajoute 1 à ladite première valeur $\lambda_o$ pour calculer ladite division par deux comme dans l'opération précédente.

Enfin, si on choisit de représenter le point P= (x,y) par (x, $\lambda_p$) avec $\lambda_p = x + y/x$ qui donne par ladite division par deux le point

$$\left[\frac{1}{2}\right] P = (u_o, v_o)$$

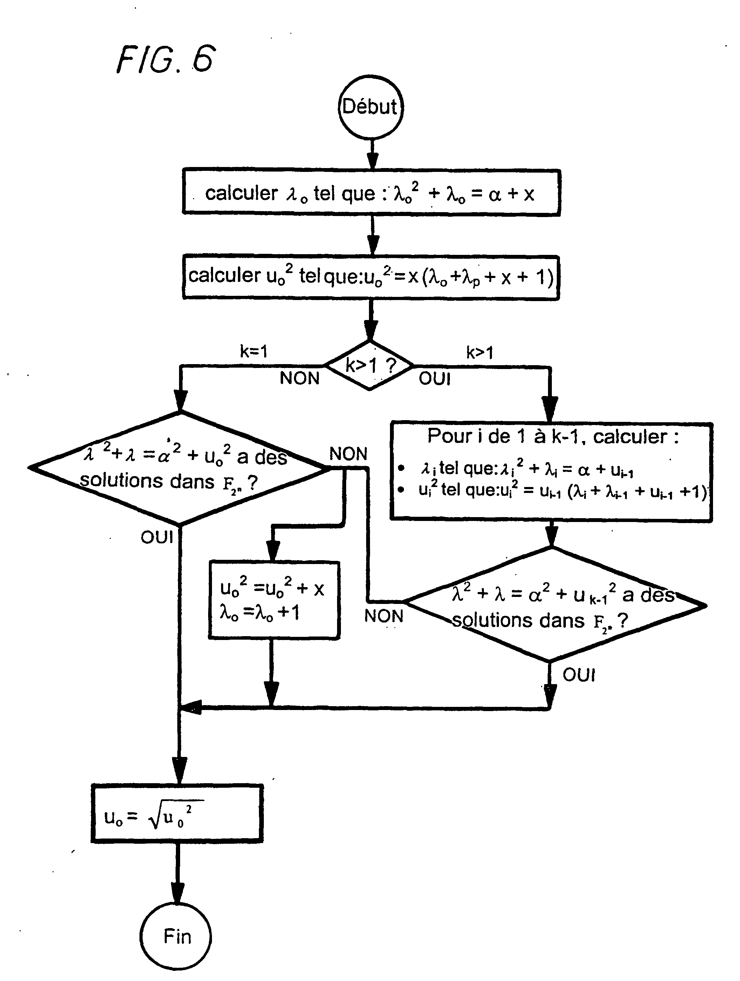

de la courbe elliptique représenté par ($u_o$, $\lambda_o$) avec $\lambda_o = u_o + v_0/u_0$ alors l'algorithme est conforme à l'organigramme de la figure 6 où :

- on cherche une première valeur $\lambda_o$ telle que $\lambda_o^2 + \lambda_o = \alpha + x$
- on calcule une seconde valeur $u_o^2$ telle que $u_o^2 = x (\lambda_o + \lambda_p + x + 1)$,
- si k vaut 1, on cherche si l'équation : $\lambda^2 + \lambda = \alpha^2 + u_o^2$ a des solutions dans $F_{2^n}$,
- dans l'affirmative on calcule ladite division par deux par :

$$u_o = \sqrt{u_0^2}$$

et

$$\left[\frac{1}{2}\right] P = (u_o, \lambda_o)$$

- dans la négative, on ajoute x à ladite deuxième valeur $u_o^2$ et on ajoute 1 à ladite première valeur $\lambda_o$ pour calculer ladite division par deux comme dans l'opération précédente ;
- si k est plus grand que 1, on effectue un calcul itératif consistant à :

chercher une valeur $\lambda_i$, telle que $\lambda_i^2 + \lambda_i = \alpha + u_{i-1}$
puis calculer la valeur $u^2{}_i$ telle que $u_i^2 = u_{i-1} (\lambda_i + \lambda_{i-1} + u_{i-1} +1)$

en incrémentant i à partir de i=1 jusqu'à obtenir la valeur $u^2{}_{k-1}$
- on cherche si l'équation $\lambda^2 + \lambda = \alpha^2 + u^2{}_{k-1}$ a des solutions dans $F_{2n}$
- dans l'affirmative on calcule ladite division par deux par :

$$u_o = \sqrt{u_0{}^2}$$

et

$$\left[\frac{1}{2}\right] P = (u_o, \lambda_o)$$

- dans la négative, on ajoute x à ladite deuxième valeur $u_o{}^2$ et on ajoute 1 à ladite première valeur $\lambda_o$ pour calculer ladite division par deux comme dans l'opération précédente.

On va maintenant décrire comment effectuer rapidement le test, la résolution de l'équation du second degré, et le calcul de la racine carrée dans l'algorithme de division d'un point par 2. On considérera les deux cas en base normale et polynomiale.

Les résultats en base normale sont connus. On peut considérer $F_{2n}$ comme espace vectoriel à n dimensions sur $F_2$. Dans une base normale, un élément du corps est représenté par :

$$x \simeq \sum_{i=0}^{n-1} x_i \beta^{2^i} \qquad\qquad x_i \in \{0,1\}$$

où $\beta \in F_{2n}$ est choisi tel que : $\{\beta, \beta^2, ..., \beta^{2n-1}\}$ est une base $F_{2n}$. Dans une base normale, la racine carrée se calcule par un décalage circulaire gauche, et l'élévation au carré par un décalage circulaire droit. Les temps de calcul correspondants sont donc négligeables.

Si l'équation du second degré : $\lambda^2 + \lambda = x$ a ses solutions dans $F_{2n}$, une solution est alors donnée par :

$$\lambda = \sum_{i=1}^{n-1} \lambda_i \beta^{2^i} \quad \text{avec :} \quad \lambda_i = \sum_{k=1}^{i} x_i \qquad 1 \le i \le n-1$$

Le temps de calcul de $\lambda$ est négligeable devant le temps de calcul d'une multiplication ou d'une inversion dans le corps. Comme le temps de calcul d'une solution de l'équation du second degré est négligeable, on peut effectuer le test de la manière suivante : calculer un candidat $\lambda$ à partir de x et tester si $\lambda^2 + \lambda = x$. Si ce n'est pas le cas, l'équation n'a pas de solution dans $F_{2n}$.

En base polynomiale, on utilise la représentation :

$$x = \sum_{i=0}^{n-1} x_i T^i$$

avec $x_i \in \{0,1\}$. La racine carrée de x peut être calculée en stockant l'élément $\sqrt{T}$ si l'on remarque que :

- dans un corps de caractéristique 2, la racine carrée est un morphisme du corps,

$$\sqrt{\sum_{i\,pair} x_i T^i} = \sum_{i\,pair} x_i T^{\frac{i}{2}}$$

Regroupant dans x les puissances paires et impaires de T et prenant la racine carrée, il vient :

$$\sqrt{x} = \sum_{i \ \text{pair}} x_i T^{\frac{i}{2}} + \sqrt{T} \sum_{i \ \text{impair}} x_i T^{\frac{i-1}{2}}$$

ainsi, pour calculer une racine carrée, il suffit de "réduire" deux vecteurs de moitié, et d'exécuter ensuite une multiplication d'une valeur précalculée par un élément de longueur n/2. C'est pourquoi le temps de calcul d'une racine carrée dans une base polynomiale est équivalent à la moitié du temps de calcul d'une multiplication dans le corps.

Pour le test et la résolution de l'équation du second degré, considérons $F_{2^n}$ comme un espace vectoriel à n dimensions sur $F_2$. L'application F définie par:

$$F : F_{2^n} \rightarrow F_{2^n}$$

$$\lambda \rightarrow \lambda^2 + \lambda$$

est alors un opérateur linéaire de noyau {0, 1}

Pour un x donné, l'équation: $\lambda^2 + \lambda = x$ a ses solutions dans $F_{2^n}$ si et seulement si le vecteur x est dans l'image de F. Im(F) est un sous-espace de $F_{2^n}$ à n -1 dimensions. Pour une base donnée de $F_{2^n}$, et le produit scalaire correspondant, il existe un seul vecteur non trivial orthogonal à tous les vecteurs de Im(F). Soit w ce vecteur. On a :

$$\exists \lambda \in F_{2^n} : \lambda^2 + \lambda = x \Leftrightarrow x \bullet w = 0$$

Ainsi l'exécution du test peut se faire en additionnant les composantes de x auxquelles correspondent des composantes de w égales à 1. Le temps d'exécution de ce test est négligeable.

Pour la résolution de l'équation du $2^{nd}$ .degré : $F(\lambda) = \lambda^2 + \lambda = x$ dans une base polynomiale, on propose une méthode simple et directe imposant le stockage d'une matrice n x n. Pour cela, on cherche un opérateur linéaire G tel que :

$$\forall x \in \text{Im}(F):F(G(x))=(G(x))^2 + G(x)=x$$

Soit $\gamma \in F_{2^n}$ un vecteur tel que $\gamma \notin \text{Im}(F)$ et définissons G par:

$$G = \widetilde{F}^{-1} \quad \text{avec} \quad \widetilde{F}(T^i) = \begin{cases} \gamma & \text{si}: \ i = 0 \\ F(T^i) & \text{si}: \ 1 \leq i \leq n\text{-}1 \end{cases}$$

Etant donné

$$x = \sum_{i=1}^{n-1} x_i F(T^i) \in \text{Im}(F)$$

alors G(x) est solution de l'équation du $2^{nd}$ degré. Une implémentation consiste à précalculer la matrice représentant G dans la base {1,T,....., $T^{n-1}$}. En caractéristique 2, la multiplication d'une matrice par un vecteur se réduit à l'addition des colonnes de la matrice auxquelles correspondent un composante du vecteur égale à 1. Il s'ensuit que cette méthode de résolution d'une équation du $2^{nd}$ degré consomme en moyenne n/2 additions dans le corps $F_{2^n}$.

On décrit ci-dessous l'application des principes exposés à la multiplication scalaire.

Soient $P \in E (F_{2^n})$ un point d'ordre r impair, c un entier aléatoire et m la partie entière de $\log_2 (r)$. Calculons le produit [c]P d'un point par un scalaire en utilisant l'application de division d'un point par 2.

On démontre que :

Pour tout entier c; il existe un nombre rationnel de la forme :

$$\sum_{i=0}^{m} \frac{c_i}{2^i} \qquad c_i \in \{0,1\}$$

tel que :

$$c \equiv \sum_{i=0}^{m} \frac{c_i}{2^i} \quad (\text{mod } r)$$

Soit <P> le groupe cyclique généré par P. Comme on a l'isomorphisme d'anneaux:

$$P \approx Z/rZ$$

$$[k]P \rightarrow k$$

On peut calculer la multiplication scalaire par:

$$[c]P = \sum_{i=0}^{m} \left[ \frac{c_i}{2} \right] P$$

en utilisant des divisions par 2 et des additions. L'algorithme bien connu de doublement-addition peut être utilisé pour ces calculs. Il suffit pour cela de remplacer dans l'algorithme les doublements par des divisions par 2. Il faut exécuter $\log_2 (r)$ divisions par 2 et, en moyenne, $1/2 \log_2 (r)$ additions. Il existe des améliorations à l'algorithme de doublement-addition qui ne demandent que $1/3 \log_2 (r)$ additions en moyenne.

Par conséquent une multiplication scalaire précitée utilisant une division par deux telle que définie ci-dessus est obtenue par les opérations suivantes :

- si ledit scalaire de la multiplication est noté S, on choisit m+1 valeurs So... Sm $\in$ {0,1} pour définir S par :

$$S = \sum_{i=0}^{m} S_i \left( \frac{r+1}{2} \right)^i$$

- r étant l'ordre impair précité et m étant l'entier unique compris entre $\log_2(r)$ -1 et $\log_2(r)$,
- on calcule la multiplication scalaire [S]P d'un point P de ladite courbe elliptique par le scalaire S par application d'un algorithme consistant à déterminer la suite de points $(Q_{m+1}, Q_m..., Q_i..., Q_o)$ de ladite courbe elliptique E telle que :

$$Q_{m+1} = O \text{ (élément neutre)}$$

$$Q_i = [S_i]P + \left[ \frac{1}{2} \right] Q_{i+1} \text{ avec } o \le i \le m$$

- le calcul du dernier point $Q_o$ de ladite suite donnant le résultat [S] P de ladite multiplication scalaire.

Pour additionner le point P initial à un résultat intermédiaire

$$Q = \left[\frac{1}{2}\right] Q_i,$$

on utilise l'algorithme suivant, qui est l'algorithme traditionnel, légèrement modifié:

Entrée: P = (x,y) en coordonnées affines et Q = (u, u(u + $\lambda_Q$ )) représenté par (u, $\lambda_Q$)
Sortie: P + Q = (s, t) en coordonnées affines

algorithme:

1. Calculer: $\lambda = \frac{y + u(u + \lambda_Q)}{}$
2. Calculer: s = $\lambda^2$ ≠ ⅄ ⅄ a + x + u
3. Calculer: t = (s + x)$\lambda$ + s + y
4. Résultat: (s, t)

Cet algorithme utilise 1 inversion, 3 multiplications, et 1 racine carrée.

Le gain de temps obtenu en remplaçant les opérations de multiplication par 2 par des divisions par 2 est important. En coordonnées affines, la multiplication par 2 et l'addition demandent toutes deux: une inversion, deux multiplications, et une racine carrée. Si le scalaire de la multiplication par un scalaire est représenté par un vecteur de bits de longueur m et de k composantes non nulles, les opérations pour la multiplication scalaire demandent :

| opération | doublement et addition | Division par 2 et addition |
|---|---|---|
| inversions | m + k | k |
| multiplications | 2m + 2k | m + 3k |
| carrés | m + k | k |
| résolution $\lambda^2 + \lambda = a + x$ | 0 | m |
| racines carrées | 0 | m |
| tests | 0 | m |

Ainsi, en utilisant la division par 2, on économise m inversions, m-k multiplications, et m carrés, au prix de m résolutions du 2nd.degré, m racines carrées et m tests.

En base polynomiale, on peut obtenir une amélioration en temps d'exécution voisine de 50%.

En base normale, on estime le temps de calcul de la racine carrée, du test et de la résolution d'équation du 2nd. degré négligeable devant le temps de calcul d'une multiplication ou d'une inversion. En supposant en outre que le temps de calcul d'une inversion est équivalent au temps de calcul de 3 multiplications, on arrive à une amélioration du temps d'exécution de 55%.

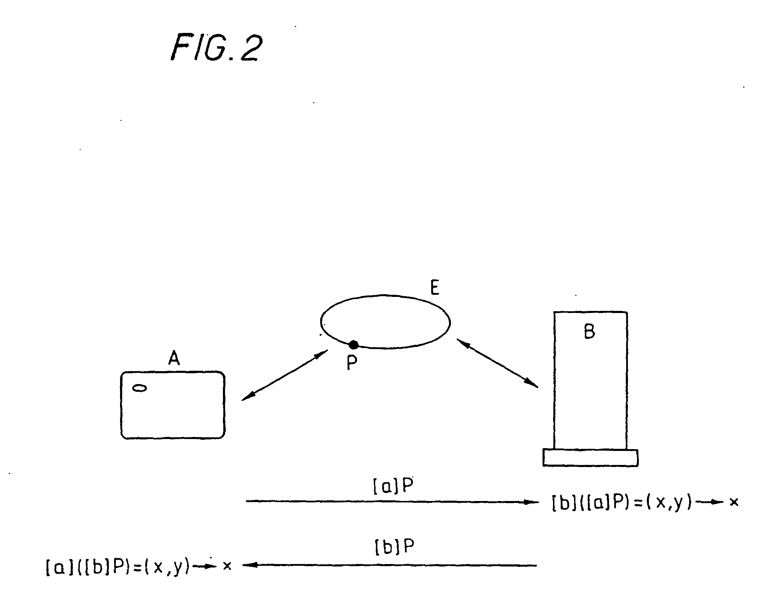

La figure 2 illustre schématiquement une application possible des algorithmes décrits ci-dessus, mis en oeuvre entre deux entités A et B échangeant des informations à travers un canal de communication non sécurisé. Ledit canal de communication peut se résumer ici à de simples liaisons électriques établies entre les deux entités le temps d'une transaction. Il peut aussi comporter un réseau de télécommunication, hertzien et/ou optique. En l'occurrence, ici l'entité A est une carte à microcircuit et l'entité B est un serveur. Une fois mis en relation l'une avec l'autre par ledit canal de communication, les deux entités vont appliquer un protocole de construction d'une clef commune. Pour ce faire :

- l'entité A possède une clef secrète a
- l'entité B possède une clef secrète b

Elles doivent élaborer une clef secrète x connue d'elles seules, à partir d'une clef publique constituée par un point P d'ordre impair r d'une courbe elliptique E choisie et non supersingulière.

Le protocole mis en oeuvre est du type de Diffie-Hellman en remplaçant les "multiplications par deux " habituelles dites doublements de point par l'opération dite de "division par deux", selon l'invention décrite ci-dessus.

Pour ce faire, l'algorithme est le suivant :

- la première entité (par exemple A) calcule la multiplication scalaire [a]P et envoie le point résultat à la seconde entité,
- la seconde entité (B) calcule la multiplication scalaire [b]P et envoie le point résultat à la première entité,
- les deux entités calculent respectivement un point commun (C) = (x,y) de ladite courbe elliptique (E) en effectuant respectivement les multiplications scalaires [a] ([b]P) et [b] ([a]P), toutes deux égales à [a.b]P,
- les deux entités choisissent comme clef commune la coordonnée x dudit point commun (C) obtenu par ladite multiplication scalaire [a.b]P, au moins l'une des multiplications scalaires précédentes, et de préférence toutes, étant effectuée à l'aide de divisions par deux prédéfinies.

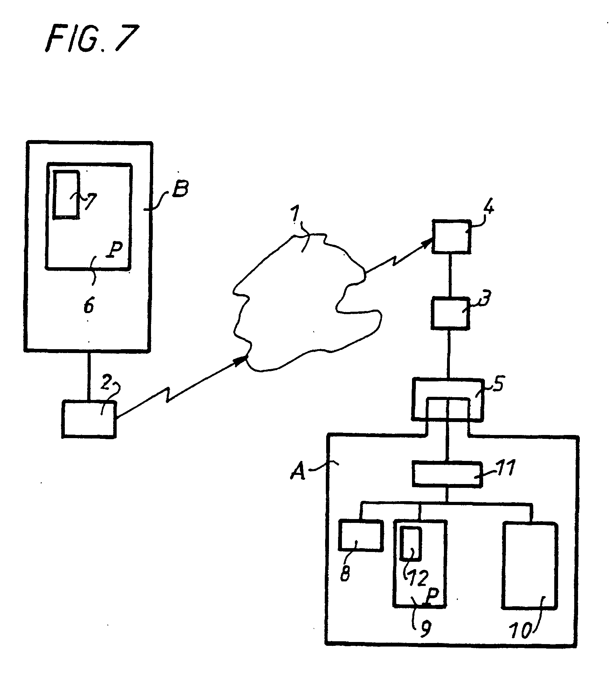

A titre d'exemple plus précis, la figure 7 représente un serveur B relié à un réseau de communication 1 par l'intermédiaire d'une interface de communication 2, par exemple du type modem. De manière analogue, une station de calcul 3 est reliée au réseau 1 par une interface de communication 4. La station 3 est équipée d'un lecteur de carte à microcircuit 5, dans lequel est insérée la carte à microcircuit A.

La mémoire vive 6 du serveur B contient un programme 7 capable d'exécuter des calculs cryptographiques sur courbes elliptiques, et en particulier le produit d'un point par un scalaire et la division d'un point par 2.

La carte A comporte une unité centrale 11, une mémoire vive dite "RAM" 8, une mémoire morte dite "ROM" 9 et une mémoire réinscriptible dite "EEPROM" 10. L'une des mémoires 9 ou 10 contient un programme 12 capable d'exécuter des calculs cryptographiques sur courbes elliptiques, et en particulier le produit d'un point par un scalaire et la division d'un point par 2.

Les deux programmes 7 et 12 ont une référence commune constituée d'une même courbe elliptique (E) et d'un même point $P=(x_0, y_0)$ de (E).

Lorsque A désire construire en parallèle avec B une clé secrète commune pour sécuriser un dialogue avec B, il choisit un scalaire $\underline{a}$ et envoie à B le produit $Q=[a]P=(x_1, y_1)$. En réponse à cet envoi, B choisit un scalaire $\underline{b}$ et retourne à A le produit $R=[b]P = (x_2, y_2)$.

A calcule alors le produit [a] R = [ab]P = (x, y), tandis que B calcule le produit [b] Q = [ab]P = (x, y), et A et B adoptent x comme clé secrète commune.

Ces opérations peuvent être représentées par le tableau ci-dessous. Celles qui sont effectuées dans le serveur B sont indiquées dans la colonne de droite tandis que celles qui sont effectuées dans la carte A sont indiquées dans la colonne de gauche, les flèches horizontales symbolisant les transferts d'informations via le réseau 1.

Une autre application possible mettant en jeu l'invention est susceptible d'être mise en oeuvre entre les deux entités A et B de la figure 7. Il s'agit d'un protocole de signature d'un message M transmis entre A et B via le canal non sécurisé, c'est-à-dire le réseau 1. Le but de ce protocole, connu dans ses grandes lignes, est d'apporter la certitude que le message reçu par l'une des entités a bien été émis par celle avec laquelle elle correspond.

Pour ce faire, l'entité émettrice (par exemple A) possède deux clefs permanentes, l'une secrète $\underline{a}$ et l'autre publique Q = [a] P, P étant un point d'une courbe elliptique (E), P et (E) étant connus et convenus par A et B. Une autre clef publique est constituée par le point P d'ordre impair r de la courbe elliptique E choisie, non supersingulière. Les opérations mises en jeu impliquent des divisions par deux, au sens défini ci-dessus.

Selon un exemple possible :

-   la première entité (A) possédant ladite paire de clefs permanentes construit une paire de clefs à utilisation unique, l'une (g) étant choisie arbitrairement et l'autre, [g] P résultant d'une multiplication scalaire de ladite clef (g) choisie arbitrairement par le point P public de ladite courbe elliptique, les coordonnées de cette clef ([g]P) étant notées (x,y) avec $2 \leq g \leq r-2$,

-   la première entité (A) convertit le polynôme x de ladite clef à utilisation unique [g]P = (x,y) en un entier i dont la valeur binaire est représentée par la séquence des coefficients binaires dudit polynôme x,

-   ladite première entité (A) calcule une signature (c,d) du message (M) de la façon suivante :

$$c = i \text{ modulo } r$$

$$d = g^{-1} (M + ac) \text{ modulo } r,$$

-   ladite première entité envoie ledit message (M) et ladite signature (c, d) à la seconde entité ; à réception

-   ladite seconde entité (B) vérifie si les éléments de ladite signature (c,d) appartiennent chacun à l'intervalle [1, r-1],

-   dans la négative, déclare la signature non valide et stoppe

-   dans l'affirmative, ladite seconde entité (B) calcule trois paramètres :

$$h = d^{-1} \text{ modulo } r$$

$$h_1 = Mh \text{ modulo } r$$

$$h_2 = ch \text{ modulo } r$$

-   ladite seconde entité calcule un point T de ladite courbe elliptique par la somme des multiplications scalaires des points P et Q par les deux derniers paramètres cités :

$$T = [h_1] P + [h_2] Q$$

si le point résultant T est l'élément neutre, ladite seconde entité déclare la signature non valide et stoppe. sinon, considérant le point T de coordonnées x' et y' : T = (x',y'),

-   ladite seconde entité (B) convertit le polynôme x' de ce point en un entier i' dont la valeur binaire est représentée par la séquence des coefficients binaires dudit polynôme x',

-   ladite seconde entité (B) calcule c' = i' modulo r et,

-   vérifie que c' = c pour valider ladite signature ou l'invalider dans le cas contraire, au moins une opération de multiplication scalaire précitée et, de préférence toutes, étant effectuée à l'aide de divisions par deux prédéfinies.

Ces opérations peuvent être représentées par le tableau ci-dessous où les opérations effectuées dans le serveur B sont indiquées dans la colonne de droite tandis que les opérations effectuées dans la carte A sont indiquées dans la colonne de gauche, la flèche entre les deux colonnes symbolisant les transferts d'informations via le réseau 1.

$$\textbf{A} \qquad\qquad\qquad\qquad \textbf{B}$$

choix g        $2 \leq g \leq r-2$

  [g] P = x, y

$x = \sum x_i\, t^i \rightarrow i = \sum x_i\, 2^i$

message M

c = i mod r

$d = g^{-1}\,(M+ac) \bmod r$

M, (c, d) $\longrightarrow$ $1 \leq c \leq r-1$ ? <u>non</u>

$\qquad\qquad\qquad\qquad\qquad\qquad\downarrow$ oui $\qquad$ erreur $\longrightarrow$

$\qquad\qquad\qquad\qquad\qquad\qquad 1 \leq d \leq r-1$ ? <u>non</u>

$\qquad\qquad\qquad\qquad\qquad\qquad\downarrow$ oui $\qquad$ erreur $\longrightarrow$

$\qquad\qquad\qquad\qquad\qquad h = d^{-1} \bmod r$

$\qquad\qquad\qquad\qquad\qquad h_1 = Mh \bmod r$

$\qquad\qquad\qquad\qquad\qquad h_2 = ch \bmod r$

$\qquad\qquad\qquad\qquad\qquad T = [h_1]\,P + [h_2]\,Q = (x', y')$

$\qquad\qquad\qquad\qquad\qquad\qquad T = O$ ? $\underline{\text{oui}} \longrightarrow$

$\qquad\qquad\qquad\qquad\qquad\qquad$ non

$\qquad\qquad\qquad\qquad x' - \sum x_i t^i \rightarrow i' = \sum x_i\, 2^i$

$\qquad\qquad\qquad\qquad\qquad c' = i' \bmod r$

$\qquad\qquad\qquad\qquad\qquad c' = c$ ? $\qquad$ <u>non</u> $\longrightarrow$

$\qquad\qquad\qquad\qquad\qquad\qquad\downarrow$ oui

$\qquad\qquad\qquad\qquad\qquad\textbf{BON}\qquad\qquad\qquad\textbf{MAUVAIS}$

## Revendications

**1.** Procédé de cryptographie mis en oeuvre entre deux entités échangeant des informations à travers un canal de communication non sécurisé, du type comprenant au moins une phase opératoire consistant à multiplier un point d'ordre impair d'une courbe elliptique non supersingulière par un entier, en coordonnées affines, **caractérisé en ce que**, dans le but de réaliser l'échange d'informations à travers le canal de communication non sécurisé, une telle phase opératoire comprend des additions et des divisions par deux de points de ladite courbe elliptique où l'addition de points est une opération connue, et la division par deux d'un point P est définie comme le point unique D d'ordre impair tel que [2]D = P, un tel point étant noté

$$\left[\frac{1}{2}\right] P,$$

et l'opération de division par 2 :

$$\left[\frac{1}{2}\right]$$

**2.** Procédé selon la revendication 1, où $F_{2^n}$ est un corps fini de $2^n$ éléments, $E(F_{2^n})$ est le sous-groupe d'une courbe elliptique E, défini par :

$$E(F_{2^n}) = \{(x,y) \in F_{2^n} \times F_{2^n} \mid y^2 + xy = x^3 + \alpha x^2 + \beta\} \cup \{O\} \quad \alpha, \beta \in F_{2^n}, \beta \neq 0$$

et $E[2^k]$ est l'ensemble des points P de ladite courbe elliptique tels que P, additionné $2^k$ fois à lui-même donne l'élément neutre $O$, avec k entier supérieur ou égal à 1, **caractérisé en ce qu'**un point P =(x,y) de ladite courbe elliptique donne par ladite division par deux le point

$$\left[\frac{1}{2}\right] P = (u_o, v_o)$$

de ladite courbe elliptique, obtenu en effectuant les opérations suivantes :

- on cherche une première valeur $\lambda_o$ telle que $\lambda_o^2 + \lambda_o = \alpha + x$
- on calcule une seconde valeur $u_o^2$ telle que $u_o^2 = x(\lambda_o + 1) + y$
- si k vaut 1, on cherche si l'équation : $\lambda^2 + \lambda = \alpha^2 + u_o^2$ a des solutions dans $F_{2^n}$,
- dans l'affirmative on calcule ladite division par deux par :

$$u_o = \sqrt{u_0^2}$$

$$v_o = u_o (u_o + \lambda_o)$$

et

$$\left[\frac{1}{2}\right] P = (u_o, v_o)$$

- dans la négative, on ajoute x à ladite deuxième valeur $u_o^2$ et on ajoute 1 à ladite première valeur $\lambda_o$ pour calculer ladite division par deux comme dans l'opération précédente;
- si k est plus grand que 1, on effectue un calcul itératif consistant à : chercher une valeur $\lambda_i$, telle que $\lambda_i^2 + \lambda_i = \alpha + u_{i-1}$
  puis calculer la valeur $u_i^2$ telle que $u_i^2 = u_{i-1}(\lambda_i + \lambda_{i-1} + u_{i-1} + 1)$
  en incrémentant i à partir de i = 1 jusqu'à obtenir la valeur $u_{k-1}^2$
- on cherche si l'équation $\lambda^2 + \lambda = \alpha^2 + u_{k-1}^2$ a des solutions dans $F_{2^n}$
- dans l'affirmative on calcule ladite division par deux par :

$$u_o = \sqrt{u_0{}^2}$$

$$v_o = u_o \, (u_o + \lambda_o)$$

et

$$\left[\frac{1}{2}\right] P = (u_o, \, v_o)$$

- dans la négative, on ajoute x à ladite deuxième valeur $u_o{}^2$ et on ajoute 1 à ladite première valeur $\lambda_o$ pour calculer ladite division par deux comme dans l'opération précédente.

**3.** Procédé selon la revendication 1 où : $F_{2n}$ est un corps fini de $2^n$ éléments, $E(F_2{}^n)$ est le sous-groupe d'une courbe elliptique E, défini par :

$$E(F_{2^n}) = \{(x,y) \in F_{2^n} \times F_{2^n} \mid y^2 + xy = x^3 + \alpha x^2 + \beta\} \cup \{O\} \; \alpha, \beta \in F_{2^n}, \beta \neq 0$$

et $E[2^k]$ est l'ensemble des points P de ladite courbe elliptique tels que P, additionné $2^k$ fois à lui même donne l'élément neutre $O$, avec k entier supérieur ou égal à 1, **caractérisé en ce qu'**un point P = (x,y) de ladite courbe elliptique donne par ladite division par deux le point

$$\left[\frac{1}{2}\right] P = (u_o, \, \lambda_o)$$

avec $\lambda_o = u_o + v_o/u_o$ obtenu en effectuant les opérations suivantes :

- on cherche une première valeur $\lambda_o$ telle que $\lambda_o{}^2 + = \alpha + x$
- on calcule une seconde valeur $u_o{}^2$ telle que : $u_o{}^2 = x \, (\lambda_o + 1) + y$
- si k vaut 1, on cherche si l'équation : $\lambda^2 + \lambda = \alpha^2 + u_o{}^2$ a des solutions dans $F_{2n}$,
- dans l'affirmative on calcule ladite division par deux par :

$$u_o = \sqrt{u_0{}^2}$$

et

$$\left[\frac{1}{2}\right] P = (u_o, \, \lambda_o)$$

- dans la négative, on ajoute x à ladite deuxième valeur $u_o{}^2$ et on ajoute 1 à ladite première valeur $\lambda_o$ pour calculer ladite division par deux comme dans l'opération précédente ;
- si k est plus grand que 1, on effectue un calcul itératif consistant à : chercher une valeur $\lambda_i$, telle que $\lambda_i{}^2 + \lambda_i = \alpha + u_{i-1}$
  puis calculer la valeur $u_i{}^2$ telle que $u_i{}^2 = u_{i-1} \, (\lambda_i + \lambda_{i-1} + u_{i-1} + 1)$
  en incrémentant i à partir de i = 1 jusqu'à obtenir la valeur $u^2{}_{k-1}$
- on cherche si l'équation $\lambda^2 + \lambda = \alpha^2 + u^2{}_{k-1}$ a des solutions dans $F_{2n}$
- dans l'affirmative on calcule ladite division par deux par :

$$u_o = \sqrt{u_0{}^2} \quad \text{et} \quad \left[\frac{1}{2}\right]P = (u_o, \lambda_o)$$

- dans la négative, on ajoute x à ladite deuxième valeur $u_o{}^2$ et on ajoute 1 à ladite première valeur $\lambda_o$ pour calculer ladite division par deux comme dans l'opération précédente.

**4.** Procédé selon la revendication 1 où :

$F_{2^n}$ est un corps fini de $2^n$ éléments, $E(F_{2^n})$ est le sous-groupe d'une courbe elliptique E, défini par :

$$E(F_{2^n}) = \{(x,y)\in F_{2^n} \times F_{2^n} \,|\, y^2 + xy = x^3 + \alpha x^2 + \beta\} \cup \{O\} \; \alpha, \beta \in F_{2^n}, \beta \neq 0$$

et $E[2^k]$ est l'ensemble des points P de ladite courbe elliptique tels que P, additionné $2^k$ fois à lui même donne l'élément neutre $O$ avec k entier supérieur ou égal à 1, **caractérisé en ce qu'**un point P = (x,y) de ladite courbe elliptique représenté par $(x,\lambda_p)$ avec $\lambda_p = x + y/x$ donne par ladite division par deux le point

$$\left[\frac{1}{2}\right]P = (u_o, v_o)$$

de ladite courbe elliptique obtenu en effectuant les opérations suivantes :

- on cherche une première valeur $\lambda_o$ telle que $\lambda_o{}^2 + \lambda_o = \alpha + x$
- on calcule une seconde valeur $u_o{}^2$ telle que : $u_o{}^2 = x (\lambda_o + \lambda_p + x +1)$,
- si k vaut 1, on cherche si l'équation : $\lambda^2 + \lambda = \alpha^2 + u_o{}^2$ a des solutions dans $F_{2^n}$,
- dans l'affirmative on calcule ladite division par deux par :

$$u_o = \sqrt{u_0{}^2}$$

$$v_o = u_o (u_o + \lambda_o)$$

et

$$\left[\frac{1}{2}\right]P = (u_o, v_o)$$

- dans la négative, on ajoute x à ladite deuxième valeur $u_o{}^2$ et on ajoute 1 à ladite première valeur $\lambda_o$ pour calculer ladite division par deux comme dans l'opération précédente ;
- si k est plus grand que 1, on effectue un calcul itératif consistant à : chercher une valeur $\lambda_i$, telle que $\lambda_i{}^2 + \lambda_i = \alpha + u_{i-1}$
  puis calculer la valeur $u_i{}^2$ telle que $u_i{}^2 = u_{i-1} (\lambda_i + \lambda_{i-1} + u_{i-1} +1)$
  en incrémentant i à partir de i =1jusqu'à obtenir la valeur $u^2{}_{k-1}$
- on cherche si l'équation $\lambda^2 + \lambda = \alpha^2 + u^2{}_{k-1}$ a des solutions dans $F_{2^n}$ dans l'affirmative on calcule ladite division par deux par :

$$u_o = \sqrt{u_0{}^2}$$

$$v_o = u_o (u_o + \lambda_o)$$

et

$$\left[\frac{1}{2}\right] P = (u_o, v_o)$$

- dans la négative, on ajoute x à ladite deuxième valeur $u_o^2$ et on ajoute 1 à ladite première valeur $\lambda_o$ pour calculer ladite division par deux comme dans l'opération précédente.

**5.** Procédé selon la revendication 1 où : $F_{2^n}$ est un corps fini de $2^n$ éléments, $E(F_{2^n})$ est le sous-groupe d'une courbe elliptique E, défini par :

$$E(F_{2^n}) = \{(x,y) \in F_{2^n} \times F_{2^n} \,|\, y^2 + xy = x^3 + \alpha x^2 + \beta\} \cup \{O\} \quad \alpha, \beta \in F_{2^n}, \beta \neq 0$$

et $E[2^k]$ est l'ensemble des points P de ladite courbe elliptique tels que P, additionné $2^k$ fois à lui même donne l'élément neutre O, avec k entier supérieur ou égal à 1, **caractérisé en ce qu'**un point $P = (x,y)$ de ladite courbe elliptique représenté par $(x,\lambda_p)$ avec $\lambda_p = x + y/x$ donne par ladite division par deux le point

$$\left[\frac{1}{2}\right] P = (u_o, v_o)$$

de ladite courbe elliptique représenté par $(u_o, \lambda_o)$, avec $\lambda_o = u_o + v_o/u_o$, obtenu en effectuant les opérations suivantes :

- on cherche une première valeur $\lambda_o$ telle que $\lambda_o^2 + \lambda_o = \alpha + x$
- on calcule une seconde valeur $u_o^2$ telle que : $u_o^2 = x (\lambda_o + \lambda_p + x + 1)$,
- si k vaut 1, on cherche si l'équation : $\lambda^2 + \lambda = \alpha^2 + u_o^2$ a des solutions dans $F_{2^n}$,
- dans l'affirmative on calcule ladite division par deux par :

$$u_o = \sqrt{u_0^2}$$

et

$$\left[\frac{1}{2}\right] P = (u_o, \lambda_o)$$

- dans la négative, on ajoute x à ladite deuxième valeur $u_o^2$ et on ajoute 1 à ladite première valeur $\lambda_o$ pour calculer ladite division par deux comme dans l'opération précédente;
- si k est plus grand que 1, on effectue un calcul itératif consistant à : chercher une valeur $\lambda_i$, telle que $\lambda_i^2 + \lambda_i = \alpha + u_{i-1}$
  puis calculer la valeur $u_i^2$ telle que $u_i^2 = u_{i-1} (\lambda_i + \lambda_{i-1} + u_{i-1} + 1)$
  en incrémentant i à partir de i = 1jusqu'à obtenir la valeur $u^2_{k-1}$
- on cherche si l'équation $\lambda^2 + \lambda = \alpha^2 + u^2_{k-1}$ a des solutions dans $F_{2^n}$
- dans l'affirmative on calcule ladite division par deux par :

$$u_o = \sqrt{u_0^2}$$

et

$$\left[\frac{1}{2}\right] P = (u_o, \lambda_o)$$

- dans la négative, on ajoute x à ladite deuxième valeur $u_o^2$ et on ajoute 1 à ladite première valeur $\lambda_o$ pour calculer ladite division par deux comme dans l'opération précédente.

6. Procédé selon l'une des revendications précédentes, **caractérisé en ce qu'**il s'agit d'un protocole de construction d'une clef commune à partir de deux clefs secrètes appartenant respectivement aux deux entités précitées et d'une clef publique constituée par un point P d'ordre impair r d'une courbe elliptique E choisie et non supersingulière.

7. Procédé selon la revendication 6, **caractérisé en ce que**, de façon connue en soi, a et b étant les clefs secrètes d'une première et d'une seconde entités, respectivement c

- la première entité calcule la multiplication scalaire [a]P et envoie le point résultat à la seconde entité,
- la seconde entité calcule la multiplication scalaire [b]P et envoie le point résultat à la première entité,
- les deux entités calculent respectivement un point commun C = (x,y) de ladite courbe elliptique (E) en effectuant respectivement les multiplications scalaires [a] ([b]P) et [b] ([a]P), toutes deux égales à [a.b]P,
- les deux entités choisissent comme clef commune la coordonnée (x) dudit point commun (C) obtenu par ladite multiplication scalaire [a.b]P, au moins l'une des multiplications scalaires précédentes, et de préférence toutes, étant effectuée à l'aide de divisions par deux prédéfinies.

8. Procédé selon l'une des revendications 1 à 5, **caractérisé en ce qu'**il s'agit d'un protocole de signature entre deux entités à partir d'une paire de clefs permanentes appartenant à l'une des entités, l'une secrète (a) et l'autre publique (Q), résultant de la multiplication scalaire de la clef secrète (a) par une autre clef publique constituée par un point (P) d'ordre impair r d'une courbe elliptique (E) choisie et non supersingulière.

9. Procédé selon la revendication 8, **caractérisé par** les opérations suivantes :

- la première entité (A) possédant ladite paire de clefs permanentes construit une paire de clefs à utilisation unique, l'une (g) étant choisie arbitrairement et l'autre [g]P résultant d'une multiplication scalaire de ladite clef (g) choisie arbitrairement par le point P public de ladite courbe elliptique, les coordonnées de cette clef ([g]P) étant notées (x,y) avec $2 \leq g \leq r-2$,
- la première entité (A) convertit le polynome x de ladite clef à utilisation unique [g]P = (x,y) en un entier i dont la valeur binaire est représentée par la séquence des coefficients binaires dudit polynome x,
- ladite première entité (A) calcule une signature (c,d) du message (M) de la façon suivante :

$$c = i \text{ modulo } r$$

$$d = g^{-1} (M + ac) \text{ modulo } r,$$

- ladite première entité envoie ledit message (M) et ladite signature (c, d) à la seconde entité ; à réception
- ladite seconde entité (B) vérifie si les éléments de ladite signature (c,d) appartiennent chacun à l'intervalle [1, r-1],
- dans la négative, déclare la signature non valide et stoppe,
- dans l'affirmative, ladite seconde entité (B) calcule trois paramètres :

$$h = d^{-1} \text{ modulo } r$$

$$h_1 = Mh \text{ modulo } r$$

$$h_2 = ch \text{ modulo } r$$

- ladite seconde entité calcule un point T de ladite courbe elliptique par la somme des multiplications scalaires des points P et Q par les deux derniers paramètres cités :

$$T = [h_1] P + [h_2] Q$$

si le point résultant T est l'élément neutre, ladite seconde entité déclare la signature non valide et stoppe, sinon, considérant le point T de coordonnées x' et y' : T = (x',y'),
- ladite seconde entité (B) convertit le polynôme x' de ce point en un entier i' dont la valeur binaire est représentée par la séquence des coefficients binaires dudit polynôme x',
- ladite seconde entité (B) calcule c' = i' modulo r et,
- vérifie que c' = c pour valider ladite signature ou l'invalider dans le cas contraire, au moins une opération de multiplication scalaire précitée et, de préférence toutes, étant effectuée à l'aide de divisions par deux prédéfinies.

**10.** Procédé selon la revendication 7 ou 9, **caractérisé en ce qu'**une multiplication scalaire précitée utilisant des divisions par deux est obtenue par les opérations suivantes :

- si ledit scalaire de la multiplication est noté S, on choisit m+1 valeurs So... Sm $\in$ {0,1} pour définir S par :

$$S = \sum_{i=0}^{m} S_i \left( \frac{r+1}{2} \right)^i$$

r étant l'ordre impair précité et m étant l'entier unique compris entre $\log_2(r) - 1$ et $\log_2(r)$,
on calcule la multiplication scalaire [S]P d'un point P de ladite courbe elliptique par le scalaire S par application d'un algorithme consistant à déterminer la suite de points $(Q_{m+1}, Q_m..., Q_i..., Q_o)$ de ladite courbe elliptique E telle que :

$$Q_{m+1} = O \text{ (élément neutre)}$$

$$Q_i = [S_i]P + \left[ \frac{1}{2} \right] Q_{i+1}$$

avec $o \leq i \leq m$
le calcul du dernier point $Q_o$ de ladite suite donnant le résultat [S] P de ladite multiplication scalaire.

**Patentansprüche**

**1.** Kryptografieverfahren, das zwischen zwei Einheiten, die Informationen über einen nicht gesicherten Kommunikationskanal austauschen, eingesetzt wird, der Art, daß es wenigstens eine Funktionsphase umfaßt, die aus einem Multiplizieren eines Punkts ungerader Ordnung einer nicht super-singulären, elliptischen Kurve in affine Koordinaten mit einer ganzen Zahl besteht,
**dadurch gekennzeichnet, daß** mit dem Ziel einer Durchführung des Informationsaustausches über den nicht gesicherten Kommunikationskanal eine derartige Funktionsphase Additionen und Divisionen durch zwei von Punkten dieser elliptischen Kurve umfaßt, wo die Addition von Punkten eine bekannte Operation ist und die Division durch zwei von einem Punkt P als der einzige Punkt D ungerader Ordnung, wie [2]D = P, definiert wird, wobei ein derartiger Punkt

$$\left[\frac{1}{2}\right]P$$

und die Operation der Division durch 2:

$$\left[\frac{1}{2}\right]$$

notiert wird.

**2.** Verfahren nach Anspruch 1, wo $F_{2^n}$ ein endlicher Körper mit $2^n$ Elementen ist, $E(F_{2^n})$ die Untergruppe einer elliptischen Kurve E ist, die definiert ist durch:

$$E(F_{2^n}) = \{(x, y) \in F_{2^n} \times F_{2^n} \mid y^2 + xy = x^3 + \alpha x^2 + \beta\} \cup \{O\} \qquad \alpha, \beta \in F_{2^n}, \qquad \beta \neq 0$$

und $E[2^k]$ die Gesamtheit der Punkte P dieser elliptischen Kurve ist, wie P, addiert $2^k$ mal zu sich selbst, das neutrale Element O ergibt, mit ganzzahligem k größer oder gleich 1, **dadurch gekennzeichnet, daß** ein Punkt P = (x, y) dieser elliptischen Kurve durch diese Division durch zwei den Punkt

$$\left[\frac{1}{2}\right]P = (u_0, v_0)$$

dieser elliptischen Kurve gibt, der erhalten wird, indem die folgenden Operationen ausgeführt werden:

- man sucht einen ersten Wert $\lambda_0$, wie $\lambda_0^2 + \lambda_0 = \alpha + x$
- man berechnet einen zweiten Wert $u_0^2$, wie $u_0^2 = x(\lambda_0 + 1) + y$
- wenn k 1 beträgt, sucht man, ob die Gleichung $\lambda^2 + \lambda = \alpha^2 + u^2_0$ Lösungen in $F_{2^n}$ besitzt,
- im bejahenden Fall berechnet man die Division durch zwei aus:

$$u_0 = \sqrt{u_0^2}$$

$$v_0 = u_0(u_0 + \lambda_0)$$

und

$$\left[\frac{1}{2}\right]P = (u_0, v_0)$$

- im verneinenden Fall fügt man x zu dem zweiten Wert $u_0^2$ hinzu und man fügt 1 zu dem ersten Wert $\lambda_0$ hinzu, um die Division durch zwei wie in der vorherigen Operation zu berechnen;
- wenn k größer als 1 ist, führt man eine iterative Berechnung durch, bestehend aus:

    Suchen eines Wertes $\lambda_i$, wie $\lambda_i^2 + \lambda_i = \alpha + u_{i-1}$
    anschließend Berechnen des Werts $u^2_i$, wie $u^2_i = u_{i-1}(\lambda_i + \lambda_{i-1} + u_{i-1} + 1)$
    indem i ausgehend von i = 1 inkrementiert wird, bis der Wert $u^2_{k-1}$ erhalten wird;

- man sucht, ob die Gleichung $\lambda^2 + \lambda = \alpha^2 + u^2_{k-1}$ Lösungen in $F_{2^n}$ besitzt;
- bejahendenfalls berechnet man die Division durch zwei aus:

$$u_0 = \sqrt{u_0^2}$$

$$v_0 = u_0(u_0 + \lambda_0)$$

und

$$\left[\frac{1}{2}\right]P = (u_0, v_0)$$

- verneinendenfalls fügt man x zu dem zweiten Wert $u_0^2$ hinzu und man fügt 1 zu dem ersten Wert $\lambda_0$ hinzu, um die Division durch zwei wie in der vorherigen Operation zu berechnen.

**3.** Verfahren nach Anspruch 1, wo: $F_{2^n}$ ein endlicher Körper von $2^n$ Elementen ist, $E(F_{2n})$ die Untergruppe einer elliptischen Kurve E ist, die definiert ist durch:

$$E(F_{2^n}) = \left\{(x, y) \in F_{2^n} \times F_{2^n} \mid y^2 + xy = x^3 + \alpha x^2 + \beta\right\} \cup \{O\} \qquad \alpha, \beta \in F_{2^n}, \qquad \beta \neq 0$$

und $E[2^k]$ die Gesamtheit der Punkte P dieser elliptischen Kurve ist, wie P, $2^k$ mal zu sich selbst addiert, das neutrale Element O ergibt, mit ganzzahligem k größer oder gleich 1, **dadurch gekennzeichnet, daß** ein Punkt P = (x, y) dieser elliptischen Kurve durch diese Division durch zwei den Punkt

$$\left[\frac{1}{2}\right]P = (u_0, \lambda_0)$$

mit $\lambda_0 = u_0 + v_0/u_0$ ergibt, welcher erhalten wird, indem die folgenden Operationen durchgeführt werden:

- man sucht einen ersten Wert $\lambda_0$, wie $\lambda_0^2 + \lambda_0 = \alpha + x$
- man berechnet einen zweiten Wert $u_0^2$, wie: $u_0^2 = x(\lambda_0 + 1) + y$
- wenn k 1 beträgt, sucht man, ob die Gleichung $\lambda^2 + \lambda = \alpha^2 + u_0^2$ in $F_{2^n}$ Lösungen besitzt,
- im bejahenden Fall berechnet man diese Division durch zwei aus:

$$u_0 = \sqrt{u_0^2}$$

*und*

$$\left[\frac{1}{2}\right]P = (u_0, \lambda_0)$$

- im negativen Fall fügt man x zu dem zweiten Wert $u_0^2$ hinzu und fügt 1 zu dem ersten Wert $\lambda_0$ hinzu, um die Division durch zwei wie in der vorherigen Operation zu berechnen;
- wenn k größer als 1 ist, führt man eine iterative Berechnung durch, bestehend aus:

Suchen eines Wertes $\lambda_i$, wie $\lambda_i^2 + \lambda_i = \alpha + u_{i-1}$
dann Berechnen des Werts $u_i^2$, wie $u_i^2 = u_{i-1}(\lambda_i + \lambda_{i-1} + u_{i-1} + 1)$
indem i ausgehend von i = 1 inkrementiert wird, bis der Wert $u_{k-1}^2$ erhalten wird;

- man sucht, ob die Gleichung $\lambda^2 + \lambda = \alpha^2 + u^2_{k-1}$ in $F_{2n}$ Lösungen besitzt;
- im bejahenden Fall berechnet man die Division durch zwei aus:

$$u_0 = \sqrt{u_0^2} \qquad \text{und} \qquad \left[\frac{1}{2}\right]P = (u_0, \lambda_0)$$

- im negativen Fall fügt man x zu dem zweiten Wert $u_0^2$ hinzu und fügt 1 zu dem ersten Wert $\lambda_0$ hinzu, um diese Division durch zwei wie in der vorherigen Operation zu berechnen.

4. Verfahren nach Anspruch 1, wo:

$F_{2n}$ ein endlicher Körper von $2^n$ Elementen ist, $E(F_2 n)$ die Untergruppe einer elliptischen Kurve E ist, definiert durch:

$$E(F_{2^n}) = \left\{(x, y) \in F_{2^n} \times F_{2^n} \mid y^2 + xy = x^3 + \alpha x^2 + \beta\right\} \cup \{O\} \quad \alpha, \beta \in F_{2^n}, \qquad \beta \neq 0$$

und $E[2^k]$ die Gesamtheit der Punkte P dieser elliptischen Kurve ist, wie P, $2^k$ mal zu sich selbst addiert, das neutrale Element O ergibt, mit ganzzahligem k größer oder gleich 1, **dadurch gekennzeichnet, daß** ein Punkt $P = (x, y)$ dieser elliptischen Kurve, der durch $(x, \lambda_p)$ dargestellt wird, mit $\lambda_p = x + y/x$, bei dieser Division durch zwei den Punkt

$$\left[\frac{1}{2}\right]P = (u_0, v_0)$$

dieser elliptischen Kurve gibt, der durch Ausführen der folgenden Operationen erhalten wird:

- man sucht einen ersten Wert $\lambda_0$, wie $\lambda_0^2 + \lambda_0 = \alpha + x$
- man berechnet einen zweiten Wert $u_0^2$, wie: $u_0^2 = x (\lambda_0 + \lambda_p + x + 1)$ · wenn k 1 beträgt, sucht man, ob die Gleichung $\lambda^2 + \lambda = \alpha^2 + u^2_0$ Lösungen in $F_{2n}$ besitzt,
- im bejahenden Fall berechnet man diese Division durch zwei aus:

$$u_0 = \sqrt{u_0^2}$$

$$v_0 = u_0(u_0 + \lambda_0)$$

und

$$\left[\frac{1}{2}\right]P = (u_0, v_0)$$

im negativen Fall fügt man x zu diesem zweiten Wert $u_0^2$ hinzu und man fügt 1 zu dem ersten Wert $\lambda_0$ hinzu, um diese Division durch zwei wie in dem vorherigen Verfahren zu berechnen;
- wenn k größer 1 ist, führt man eine iterative Berechnung durch, bestehend aus:

Suchen eines Wertes $\lambda_i$, wie $\lambda_i^2 + \lambda_i = \alpha + u_{i-1}$
anschließend Berechnen des Werts $u^2_i$, wie $u^2_i = u_{i-1} (\lambda_i + \lambda_{i-1} + u_{i-1} + 1)$
indem i ausgehend von i = 1 inkrementiert wird, bis der Wert $u^2_{k-1}$ erhalten wird;

- man sucht, ob die Gleichung $\lambda^2 + \lambda = \alpha^2 + u^2_{k-1}$ in $F_{2n}$ Lösungen besitzt,
- im bejahenden Fall berechnet man diese Division durch zwei aus:

$$u_0 = \sqrt{u_0^2}$$

$$v_0 = u_0(u_0 + \lambda_0)$$

und

$$\left[\frac{1}{2}\right]P = (u_0, v_0)$$

- im negativen Fall fügt man x zu dem zweiten Wert $u_0^2$ hinzu und man fügt 1 zu dem ersten Wert $\lambda_0$ hinzu, um diese Division durch zwei wie in der vorherigen Operation auszuführen.

**5.** Verfahren nach Anspruch 1, wo: $F_{2n}$ ein endlicher Körper von $2^n$ Elementen ist, $E(F_2 n)$ eine Untergruppe einer elliptischen Kurve E ist, definiert durch:

$$E(F_{2^n}) = \left\{(x, y) \in F_{2^n} \times F_{2^n} \mid y^2 + xy = x^3 + \alpha x^2 + \beta\right\} \cup \{O\} \qquad \alpha, \beta \in F_{2^n}, \qquad \beta \neq 0$$

und $E[2^k]$ die Gesamtheit der Punkte P dieser elliptischen Kurve ist, wie P, $2^k$ mal zu sich selbst addiert, das neutrale Element O ergibt, mit ganzzahligem k größer gleich 1, **dadurch gekennzeichnet, daß** ein Punkt P = (x, y) dieser elliptischen Kurve, der durch $(x, \lambda_p)$ dargestellt ist, mit $\lambda_p = x + y/x$, bei dieser Division durch zwei den Punkt

$$\left[\frac{1}{2}\right]P = (u_0, v_0)$$

dieser elliptischen Kurve gibt, dargestellt durch $(u_0, \lambda_0)$, mit $\lambda_0 = u_0 + v_0/u_0$, der erhalten wird, indem die folgenden Operationen durchgeführt werden:

- man sucht einen ersten Wert $\lambda_0$, wie $\lambda_0^2 + \lambda_0 = \alpha + x$
- man berechnet einen zweiten Wert $u_0^2$, wie $u_0^2 = x (\lambda_0 + \lambda_p + x + 1)$
- wenn k 1 beträgt, sucht man, ob die Gleichung $\lambda^2 + \lambda = \alpha^2 + u_0^2$ in $F_{2n}$ Lösungen besitzt, im bejahenden Fall berechnet man diese Division durch zwei aus:

$$u_0 = \sqrt{u_0^2}$$

und

$$\left[\frac{1}{2}\right]P = (u_0, \lambda_0)$$

- im verneinenden Fall fügt man x zu diesem zweiten Wert $u_0^2$ hinzu und man fügt 1 zu dem ersten Wert $\lambda_0$ hinzu, um diese Division durch zwei wie in der vorherigen Operation durchzuführen;
- wenn k größer 1 ist, führt man eine iterative Berechnung durch, bestehend aus:
  Suchen eines Wertes $\lambda_i$, wie $\lambda_i^2 + \lambda_i = \alpha + u_{i-1}$
  anschließend Berechnen des Werts $u_i^2$, wie $u_i^2 = u_{i-1} (\lambda_i + \lambda_{i-1} + u_{i-1} + 1)$ indem i ausgehend von i = 1 inkrementiert wird, bis der Wert $u_{k-1}^2$ erhalten wird;
- man sucht, ob die Gleichung $\lambda^2 + \lambda = \alpha^2 + u_{k-1}^2$ in $F_{2n}$ Lösungen besitzt;
- im bejahenden Fall berechnet man diese Division durch zwei aus:

$$u_0 = \sqrt{u_0^2}$$

und

$$\left[\frac{1}{2}\right] P = (u_0, \lambda_0)$$

- im negativen Fall fügt man x zu dem zweiten Wert $u_0^2$ hinzu und man fügt 1 zu dem ersten Wert $\lambda_0$ hinzu, um diese Division durch zwei wie in der vorherigen Operation auszuführen.

6. Verfahren nach einem der vorhergehenden Ansprüche, **dadurch gekennzeichnet, daß** es sich um ein Konstruktionsprotokoll eines gemeinsamen Schlüssels ausgehend von zwei Geheimschlüsseln, die jeweils zwei der vorgenannten Einheiten angehören, und eines öffentlichen Schlüssels handelt, der durch einen Punkt P ungerader Ordnung r einer gewählten und nicht super-singulären, elliptischen Kurve E gebildet wird.

7. Verfahren nach Anspruch 6, **dadurch gekennzeichnet, daß**, indem in an sich bekannter Weise a und b Geheimschlüssel einer ersten bzw. zweiten Einheit sind,

  - die erste Einheit die skalare Multiplikation [a]P berechnet und den resultierenden Punkt der zweiten Einheit übermittelt,
  - die zweite Einheit die skalare Multiplikation [b]P berechnet und den resultierenden Punkt der ersten Einheit übermittelt,
  - die zwei Einheiten jeweils einen gemeinsamen Punkt C = (x, y) dieser elliptischen Kurve E berechnen, indem sie jeweils skalare Multiplikationen [a]([b]P) und [b]([a]P) durchführen, welche beide gleich [a.b]P sind,
  - die zwei Einheiten als gemeinsamen Schlüssel die Koordinate (x) des gemeinsamen Punkts C, der durch die skalare Multiplikation [a.b]P erhalten wurde, auswählen, wobei wenigstens eine der vorhergehenden, skalaren Multiplikationen und vorzugsweise sämtliche mit Hilfe von vordefinierten Divisionen durch zwei ausgeführt werden.

8. Verfahren nach einem der Ansprüche 1 bis 5, **dadurch gekennzeichnet, daß** es sich um ein Signaturprotokoll zwischen zwei Einheiten, ausgehend von einem Paar Permanentschlüsseln handelt, die einer der Einheiten angehören, einem geheimen (a) und dem anderen öffentlichen (Q), die aus der skalaren Multiplikation des Geheimschlüssels (a) mit einem anderen öffentlichen Schlüssel resultiert, der aus einem Punkt (P) ungerader Ordnung r einer gewählten und nicht super-singulären, elliptischen Kurve E besteht.

9. Verfahren nach Anspruch 8, **gekennzeichnet durch** die folgenden Operationen

  - die erste Einheit (A), die das Paar Permanentschlüssel besitzt, konstruiert ein Paar Schlüssel für eine einzige Verwendung, wobei einer (g) willkürlich gewählt wird und der andere [g]P aus einer skalaren Multiplikation dieses willkürlich gewählten Schlüssels (g) mit dem öffentlichen Punkt P dieser elliptischen Kurve resultiert, wobei die Koordinaten dieses Schlüssels ([g]P) als (x, y) mit $2 \leq g \leq r-2$ notiert bzw. bezeichnet sind,
  - die erste Einheit (A) das Polynom x dieses Schlüssels mit einziger Verwendung [g]P = (x, y) in eine ganze Zahl i umwandelt, deren binärer Wert **durch** die Sequenz von binären Koeffizienten des Polynoms x dargestellt wird,
  - die erste Einheit (A) eine Signatur (c, d) der Nachricht (M) in der folgenden Weise berechnet:

$$c = i \text{ Modulo } r$$

$$d = g^{-1} (M + ac) \text{ Modulo } r,$$

  - die erste Einheit diese Nachricht (M) und diese Signatur (c, d) an die zweite Einheit sendet; beim Empfang
  - die zweite Einheit (B) verifiziert, ob die Elemente der Signatur (c, d) jeweils dem Intervall [1, r - 1] angehören,
  - im negativen Fall erklärt sie die Signatur als nicht gültig und stoppt,

-   im zustimmenden Fall berechnet die zweite Einheit (B) drei Parameter:

$$h = d^{-1} \text{ Modulo } r$$

$$h_1 = Mh \text{ Modulo } r$$

$$h_2 = ch \text{ Modulo } r$$

-   die zweite Einheit berechnet einen Punkt T dieser elliptischen Kurve **durch** die Summe der skalaren Multiplikationen der Punkte P und Q **durch** die letzten zwei genannten Parameter:

$$T = [h_1]P + [h_2]Q$$

wenn der resultierende Punkt T das neutrale Element ist, erklärt die zweite Einheit die Signatur als nicht gültig und stoppt,
falls nicht, unter Berücksichtigung des Punkts der Koordinaten x' und y': T = (x', y'),
-   die zweite Einheit (B) wandelt das Polynom x' dieses Punktes in eine ganze Zahl i' um, deren binärer Wert **durch** die Sequenz der binären Koeffizienten des Polynoms x' dargestellt ist,
-   die zweite Einheit (B) berechnet c' = i' Modulo r und
-   verifiziert, daß c' = c, um die Signatur gültig oder in dem entgegengesetzten Fall ungültig zu erklären, wobei wenigstens eine der vorgenannten, skalaren Multiplikationen, und vorzugsweise sämtliche, mit Hilfe von vordefinierten Divisionen **durch** zwei ausgeführt wurden.

**10.** Verfahren nach Anspruch 7 oder 9, **dadurch gekennzeichnet, daß** eine vorgenannte, skalare Multiplikation, die die Divisionen durch zwei verwendet, durch die folgenden Operationen erhalten wird:

-   wenn der Skalar der Multiplikation als S bezeichnet wird, wählt man m + 1 Werte $S_0 \dots S_m \in \{0,1\}$, um S zu definieren durch:

$$S = \sum_{i=0}^{m} S_i \left( \frac{r+1}{2} \right)^i$$

wobei r von vorgenannter, ungerader Ordnung ist, und m die einzige ganze Zahl zwischen $\log_2(r) - 1$ und $\log_2(r)$ ist,

-   man berechnet die skalare Multiplikation [S]P eines Punktes P der elliptischen Kurve mit dem Skalar S durch Anwendung eines Algorithmus, bestehend im Bestimmen der Folge von Punkten $(Q_{m+1}, Q_{m\dots}, Q_{i\dots}, Q_0)$ dieser elliptischen Kurve E wie:

$$Q_{m+1} = O \text{ (neutrales Element)}$$

$$Q_i = [S_i]P + \left[ \frac{1}{2} \right] Q_{i+1}$$

mit $0 \leq i \leq m$

wobei die Berechnung des letzten Punktes $Q_0$ der Folge das Resultat [S]P der skalaren Multiplikation ergibt.

**Claims**

1. Cryptography method implemented between two entities exchanging data through a non-secure communications channel, of the type comprising at least one operational phase consisting of multiplying a point of odd order of a non-supersingular elliptical curve in affine coordinates by an integer, **characterised in that**, in order to perform the exchange of data though the non-secure communications channel, such an operational phase comprises additions and divisions by two of points of the said elliptical curve, where the addition of points is a known operation, and the division by two of a point P is defined as the only point D of odd order such that [2]D=P, such a point being denoted

$$\left[\tfrac{1}{2}\right]P,$$

and the operation of division by 2 being denoted

$$\left[\tfrac{1}{2}\right].$$

2. Method according to claim 1, in which $F_{2n}$ is a finite body of $2^n$ elements, $E(F_{2n})$ is the sub group of an elliptical curve E defined by:

$$E(F_{2^n}) = \left\{(x,y) \in F_{2^n} X F_{2^n} \,\middle|\, y^2 + xy = x^3 + \alpha x^2 + \beta\right\} \cup \{O\} \alpha, \beta \in F_{2^n}, \beta \neq 0$$

and $E[2^k]$ is all of the points P of the said elliptical curve such that P, added $2^k$ times to itself gives the neutral element O, with k an integer greater than or equal to 1, **characterised in that** a point P=(x,y) of the said elliptical curve gives by the said division by two the point

$$\left[\tfrac{1}{2}\right]P=(u_o, v_o)$$

of the said elliptical curve, obtained by performing the following operations:

- a first value $\lambda_o$ is sought such that $\lambda_o^2 + \lambda_o = \alpha + x$
- a second value $u_o^2$ is calculated such that $u_o^2 = x(\lambda_o + 1) + y$
- if k has the value 1, it is determined whether the equation: $\lambda^2 + \lambda = \alpha^2 + u^2_o$ has solution in $F_2 n$
- in the affirmative, the said division by two is calculated by:

$$u_o = \sqrt{u_0^2}$$

$$v_o = u_o(u_o + \lambda_o)$$

and

$$\left[\tfrac{1}{2}\right]P = (u_o, v_o)$$

- in the negative, x is added to the said second value $u_o^2$ and 1 is added to the first value $\lambda_o$ to calculate the said division by two as in the previous operation;
- if k is greater than 1, an iterative calculation is performed consisting of:

  finding a value $\lambda_i$, such that $\lambda_i^2 + \lambda_i = \alpha + u_{i-1}$
  then calculating the value $u^2_i$ such that

$$u^2_i = u_{i-1}(\lambda_i + \lambda_{i-1} + u_{i-1} + 1)$$

incrementing i from i=1 to obtain the value $u^2_{k-1}$

- it is determined whether the equation $\lambda^2 + \lambda = \alpha^2 + u^2_{k-1}$ has solutions in $F_{2n}$
- in the affirmative, the said division by two is calculated by

$$u_o = \sqrt{u_o^2}$$

$$v_o = u_o(u_o + \lambda_o)$$

and

$$\left[\tfrac{1}{2}\right]P = (u_o, v_o)$$

- in the negative, x is added to the said second value $u_o^2$ and 1 is added to the said first value $\lambda_o$ to calculate the said division by two as in the previous operation.

3. Method as described in claim 1, in which: $F_{2n}$ is a finite body of $2^n$ elements $E(F_{2n})$ is the sub group of an elliptical curve E defined by:

$$E(F_{2^n}) = \left\{(x, y) \in F_{2^n} X F_{2^n} \,\middle|\, y^2 + xy = x^3 + \alpha\, x^2 + \beta \right\} \cup \left\{O\right\} \alpha, \beta \in F_{2^n}, \beta \neq 0$$

and $E[2^k]$ is all of the points P of the said elliptical curve such that P, added $2^k$ times to itself gives the neutral element O, with k an integer greater than or equal to 1, **characterised in that** a point P=(x,y) of the said elliptical curve gives by the said division by two the point

$$\left[\tfrac{1}{2}\right]P = (u_o, \lambda_o)$$

with $\lambda_o = u_o + v_o/u_o$ obtained by performing the following operations:

- a first value $\lambda_o$ is sought such that $\lambda_o^2 + \lambda_o = \alpha + x$
- a second value $u_o^2$ is calculated such that $u_o^2 = x(\lambda_o + 1) + y$
- if k has the value 1, it is determined whether the equation: $\lambda^2 + \lambda = \alpha^2 + u_o^2$ has solutions in $F_{2n}$
- in the affirmative, the said division by two is calculated by:

$$u_o = \sqrt{u_o^2}$$

and

$$\left[\tfrac{1}{2}\right]P = (u_o, \lambda_o)$$

- in the negative, x is added to the said second value $u_o^2$ and 1 is added to the first value $\lambda_o$ to calculate the said division by two as in the previous operation;
- if k is greater than 1, an iterative calculation is performed consisting of:
    finding a value $\lambda_i$, such that $\lambda_i^2 + \lambda_i = \alpha + u_{i-1}$
    then calculating the value $u_i^2$ such that $u_i^2 = u_{i-1}(\lambda_i + \lambda_{i-1} + u_{i-1} + 1)$ incrementing i from i=1 to obtain the value $u^2_{k-1}$
- determining whether the equation $\lambda^2 + \lambda = \alpha^2 + u^2_{k-1}$ has solutions in $F_{2n}$

- in the affirmative, the said division by two is calculated by

$$u_o = \sqrt{u_o{}^2}$$

and

$$\left[\tfrac{1}{2}\right]P = (u_o, \lambda_o)$$

- in the negative, x is added to the said second value $u_o^2$ and 1 is added to the said first value $\lambda_o$ to calculate the said division by two as in the previous operation.

**4.** Method as claimed in claim 1, in which: $F_2n$ is a finite body of $2^n$ elements, $E(F_{2n})$ is the sub group of an elliptical curve E defined by:

$$E(F_{2^n}) = \left\{(x,y) \in F_{2^n} X F_{2^n} \middle| y^2 + xy = x^3 + \alpha x^2 + \beta \right\} \cup \{O\}\alpha, \beta \in F_{2^n}, \beta \neq 0$$

and $E[2^k]$ is all of the points P of the said elliptical curve such that P, added $2^k$ times to itself gives the neutral element O, with k an integer greater than or egal to 1, **characterised in that** a point P=(x, y) of the said elliptical curve represented by (x, $\lambda_p$) with $\lambda_p$=x+y/x gives by the said division by two the point

$$\left[\tfrac{1}{2}\right]P = (u_o, v_o)$$

of the said elliptical curve obtained by performing the following operations:

- a first value $\lambda_o$ is sought such that $\lambda_o^2 + \lambda_o = \alpha + x$
- a second value $u_o^2$ is calculated such that $u_o^2 = x(\lambda_o + \lambda_p + x + 1)$,
- if k has the value 1, it is determined whether the equation: $\lambda^2 + \lambda = \alpha^2 + u_o^2$ has solutions in $F_{2^n}$,
- in the affirmative, the said division by two is calculated by:

$$u_o = \sqrt{u_o{}^2}$$

$$v_o = u_o(u_o + \lambda_o)$$

and

$$\left[\tfrac{1}{2}\right]P = (u_o, v_o)$$

- in the negative, x is added to the said second value $u_o^2$ and 1 is added to the first value $\lambda_o$ to calculate the said division by two as in the previous operation;
- if k is greater than 1, an iterative calculation is performed consisting of:
  finding a value $\lambda_i$, such that $\lambda_i^2 + \lambda_i = \alpha + u_{i-1}$
  then calculating the value $u_i^2$ such that

$$u_i{}^2 = u_{i-1}(\lambda_i + \lambda_{i-1} + u_{i-1} + 1)$$

  incrementing i from i=1 to obtain the value $u^2_{k-1}$
- it is determined whether the equation $\lambda^2 + \lambda = \alpha^2 + u^2_{k-1}$ has solutions in $F_{2^n}$ in the affirmative, the said division by two is calculated by

$$u_o = \sqrt{u_o{}^2}$$

$$v_o = u_o(u_o + \lambda_o)$$

and

$$\left[\tfrac{1}{2}\right]P = (u_o, v_o)$$

- in the negative, x is added to the said second value $u_o{}^2$ and 1 is added to the said first value $\lambda_o$ to calculate the said division by two as in the previous operation.

5. Method as claimed in claim 1, in which: $F_{2n}$ is a finite body of 2" elements, $E(F_{2n})$ is the sub group of an elliptical curve E defined by:

$$E(F_{2^n}) = \left\{(x,y) \in F_{2^n} X F_{2^n} \middle| y^2 + xy = x^3 + \alpha\, x^2 + \beta \right\} \cup \{O\} \alpha, \beta \in F_{2^n}, \beta \neq 0$$

and $E[2^k]$ is all of the points P of the said elliptical curve such that P, added $2^k$ times to itself gives the neutral element O, with k an integer greater than or equal to 1, **characterised in that** a point P=(x,y) of the said elliptical curve represented by (x, $\lambda_p$) with $\lambda_p=x+y/x$ gives by the said division by two the point

$$\left[\tfrac{1}{2}\right]P = (u_o, v_o)$$

of the said elliptical curve represented by $(u_o, \lambda_o)$, with $\lambda_o = u_o + v_o/u_o$, obtained by performing the following operations:

- a first value $\lambda_o$ is sought such that $\lambda_o{}^2 + \lambda_o = \alpha + x$
- a second value $u_o{}^2$ is calculated such that $u_o{}^2 = x(\lambda_o + \lambda_p + x + 1)$
- if k has the value 1, it is determined whether the equation: $\lambda^2 + \lambda = \alpha^2 + u_o{}^2$ has solutions in $F_{2n}$
- in the affirmative, the said division by two is calculated by:

$$u_o = \sqrt{u_0{}^2}$$

and

$$\left[\tfrac{1}{2}\right]P = (u_o, \lambda_o)$$

- in the negative, x is added to the said second value $u_o{}^2$ and 1 is added to the first value $\lambda_o$ to calculate the said division by two as in the previous operation;
- if k is greater than 1, an iterative calculation is performed consisting of:
  finding a value $\lambda_i$, such that $\lambda_i{}^2 + \lambda_i = \alpha + u_{i-1}$
  then calculating the value $u_i{}^2$ such that $u_i{}^2 = u_{i-1}(\lambda_i + \lambda_{i-1} + u_{i-1} + 1)$ incrementing i from i=1 to obtain the value $u^2{}_{k-1}$
- determining whether the equation $\lambda^2 + \lambda = \alpha^2 + u^2{}_{k-1}$ has solutions in $F_2 n$
- in the affirmative, the said division by two is calculated by

$$u_o = \sqrt{u_o{}^2}$$

and

$$\left[\tfrac{1}{2}\right]P = (u_o, \lambda_o)$$

- in the negative, x is added to the said second value $u_o{}^2$ and 1 is added to the said first value $\lambda_o$ to calculated the said division by two as in the previous operation.

6. Method as claimed in one of the preceding claims, **characterised in that** it concerns a protocol for construction of a common key from two secret keys belonging to the two above-mentioned entities respectively and of a public key consisting of a point P of odd order r of a selected and non-supersingular elliptical curve E.

7. Method as claimed in claim 6, **characterised in that**, in a manner itself known, a and b being the secret keys of a first and of a second entity, respectively,

- the first entity calculates the scalar multiplication [a]P and sends the resulting point to the second entity,
- the second entity calculates the scalar multiplication [b]P and sends the resulting point to the first entity,
- the two entities respectively calculate a common point C=(x,y) of the said elliptical curve (E) by respectively performing the scalar multiplications [a]([b]P) and [b]([a]P), both equal to [a.b]P,
- the two entities select as common key the co-ordinate (x) of the said common point (C) obtained by the said scalar multiplication [a.b]P, at least one of the preceding scalar multiplications, and preferably all, being performed by means of predefined divisions by two.

8. Method as described in one of claims 1 to 5, **characterised in that** it concerns a signature protocol between two entities from a pair of permanent keys belonging to one of the entities, one (a) secret and the other (Q) public, resulting from the scalar multiplication of the secret key (a) by another public key consisting of a point (P) of odd order r of a selected and non-supersingular elliptical curve (E).

9. Method as claimed in claim 8, **characterised by** the following operations:

- the first entity (A) having the said pair of permanent keys constructs a pair of single usage keys, one (g) being selected arbitrarily and the other [g]P resulting from a scalar multiplication of the said arbitrarily selected key (g) by the public point P of the said elliptical curve, the co-ordinates of this key ([g]P) being denoted (x,y) with $2 \leq g \leq r-2$,
- the first entity (A) converts the polynomial x of the said single usage key [g]P=(x,y) into an integer i the binary value of which is represented by the sequence of binary coefficients of the said polynomial x,
- the said first entity (A) calculates a signature (c,d) of the message (M) in the following manner:

$$c = i \text{ modulo } r$$

$$d = g^{-1}(M+ac) \text{ modulo } r,$$

- the said first entity sends the said message (M) and the said signature (c, d) to the second entity; on reception
- the said second entity (B) verifies whether the elements of the said signature (c,d) each belong to the interval [1, r-1],
- in the negative, declares the signature invalid and stops,
- in the affirmative, the said second entity (B) calculates three parameters:

$$h = d^{-1} \text{ modulo } r$$

$$h_1 = Mh \text{ modulo } r$$

$$h_2 = ch \text{ modulo } r$$

- the said second entity calculates a point T of the said elliptical curve by the sum of the scalar multiplications of the points P and Q by the two last cited parameters:

$$T=[h_1]P+[h_2]Q$$

if the resultant point T is the neutral element, the said second entity declares the signature invalid and stops,

Otherwise, considering the point T of co-ordinates x' and y' : T=(x',y'),

- the said second entity (B) converts the polynomial x' of this point into a whole number i' the binary value of which is represented by the sequence of binary coefficients of the said polynomial x',
- the said second entity (B) calculates c'=i' modulo r and,
- verifies that c'=c to validate the said signature or invalidate it in the contrary case, at least one above-mentioned operation of scalar multiplication and, preferably, all being carried out by means of predefined divisions by two.

**10.** Method as claimed in claim 7 or 9, **characterised in that** an above-mentioned scalar multiplication using divisions by two is obtained by the following operations:

- if the said scalar of the multiplication is denoted S, m+1 values $S_o...S_m \in \{0,1\}$ are selected to define S by:

$$S = \sum_{i=0}^{m} S_i \left(\frac{r+1}{2}\right)^i$$

r being the above-mentioned odd order and m being the single whole number between $\log_2(r)-1$ and $\log_2(r)$,

the scalar multiplication [S]P is calculated of a point P of the said elliptical curve by the scalar S by application of an algorithm consisting of determining the series of points $(Q_{m+1}, Q_m..., Q_i..., Q_o)$ of the said elliptical curve E such that:

$$Q_{m+1}=O \text{ (neutral element)}$$

$$Q_i = [S_i]P + \left[\tfrac{1}{2}\right]Q_{i+1}$$

with $o \leq i \leq m$

the calculation of the last point $Q_o$ of the said series giving the result [S]P of the said scalar multiplication.

FIG.1

## FIG.2

E

A

P

B

[a]P

[b]([a]P) = ( x,y ) → x

[b]P

[a]([b]P) = ( x,y ) → x

*FIG. 3*

( Début )

calculer $\lambda_o$ tel que : $\lambda_o^2 + \lambda_o = \alpha + x$

calculer $u_o^2$ tel que : $u_o^2 = x(\lambda_o + 1) + y$

k=1 ← NON — $k>1$ ? — OUI → k>1

$\lambda^2 + \lambda = \alpha^2 + u_o^2$ a des solutions dans $F_{2^n}$ ?   NON

OUI

$u_o^2 = u_o^2 + x$
$\lambda_o = \lambda_o + 1$

Pour i de 1 à k-1, calculer :
- $\lambda_i$ tel que: $\lambda_i^2 + \lambda_i = \alpha + u_{i-1}$
- $u_i^2$ tel que: $u_i^2 = u_{i-1}(\lambda_i + \lambda_{i-1} + u_{i-1} + 1)$

NON   $\lambda^2 + \lambda = \alpha + u_{k-1}$ a des solutions dans $F_{2^n}$ ?

OUI

$u_o = \sqrt{u_o^2}$
$v_o = u_o(u_o + \lambda_o)$

( Fin )

# F/G.4

**Début**

calculer $\lambda_o$ tel que : $\lambda_o^2 + \lambda_o = \alpha + x$

calculer $u_o^2$ tel que : $u_o^2 = x (\lambda_o + 1) + y$

$k > 1$ ?

k=1 — NON

k>1 — OUI

$\lambda^2 + \lambda = \alpha^2 + u_o^2$ a des solutions dans $F_{2^n}$ ?

NON

OUI

$u_o^2 = u_o^2 + x$
$\lambda_o = \lambda_o + 1$

Pour i de 1 à k-1, calculer :
- $\lambda_i$ tel que: $\lambda_i^2 + \lambda_i = \alpha + u_{i-1}$
- $u_i^2$ tel que: $u_i^2 = u_{i-1} (\lambda_i + \lambda_{i-1} + u_{i-1} + 1)$

$\lambda^2 + \lambda = \alpha^2 + u_{k-1}^2$ a des solutions dans $F_{2^n}$ ?

NON

OUI

$u_o = \sqrt{u_o^2}$

**Fin**

# FIG.5

**Début**

calculer $\lambda_o$ tel que : $\lambda_o^2 + \lambda_o = \alpha + x$

calculer $u_o^2$ tel que: $u_o^2 = x(\lambda_o + \lambda_p + x + 1)$

$k > 1$ ?
NON — k=1
OUI — k>1

$\lambda^2 + \lambda = \alpha^2 + u_o^2$ a des solutions dans $F_{2^n}$ ?
NON
OUI

Pour i de 1 à k-1, calculer :
- $\lambda_i$ tel que: $\lambda_i^2 + \lambda_i = \alpha + u_{i-1}$
- $u_i^2$ tel que: $u_i^2 = u_{i-1}(\lambda_i + \lambda_{i-1} + u_{i-1} + 1)$

$u_o^2 = u_o^2 + x$
$\lambda_o = \lambda_o + 1$

$\lambda^2 + \lambda = \alpha^2 + u_{k-1}^2$ a des solutions dans $F_{2^n}$ ?
NON
OUI

$u_o = \sqrt{u_o^2}$
$v_o = u_o(u_o + \lambda_o)$

**Fin**

## FIG. 6

```
                    ( Début )
                        │
                        ▼
   ┌─────────────────────────────────────────────┐
   │ calculer λₒ tel que : λₒ² + λₒ = α + x        │
   └─────────────────────────────────────────────┘
```

$$\text{calculer } \lambda_o \text{ tel que : } \lambda_o^2 + \lambda_o = \alpha + x$$

$$\text{calculer } u_o^2 \text{ tel que : } u_o^2 = x(\lambda_o + \lambda_p + x + 1)$$

Décision : $k > 1$ ?

- NON ($k = 1$)
- OUI ($k > 1$)

Branche $k = 1$ — Décision :
$$\lambda^2 + \lambda = \alpha^2 + u_o^2 \text{ a des solutions dans } F_{2^n} ?$$

- NON
- OUI

$$u_o^2 = u_o^2 + x$$
$$\lambda_o = \lambda_o + 1$$

Branche $k > 1$ :
$$\text{Pour } i \text{ de 1 à } k-1, \text{ calculer :}$$
- $\lambda_i$ tel que : $\lambda_i^2 + \lambda_i = \alpha + u_{i-1}$
- $u_i^2$ tel que : $u_i^2 = u_{i-1}(\lambda_i + \lambda_{i-1} + u_{i-1} + 1)$

Décision :
$$\lambda^2 + \lambda = \alpha^2 + u_{k-1}^2 \text{ a des solutions dans } F_{2^n} ?$$

- NON
- OUI

$$u_o = \sqrt{u_o^2}$$

( Fin )

FIG.7